# EUROPEAN PATENT APPLICATION

(11) **EP 4 842 056 A1**
(43) Date of publication of application: **18.11.2026**
(21) Application number: 24919813.6
(22) Date of filing: 22.10.2024
(51) Int. Cl.: H04W 36/00

(54) **COMMUNICATION METHOD AND APPARATUS**

(30) Priority: 26.01.2024 CN 202410119211
(71) Applicant: Huawei Technologies Co., Ltd., Shenzhen, Guangdong 518129 (CN)
(72) Inventor: ZHANG, Yanqing, Shenzhen, Guangdong 518129 (CN)
(74) Representative: Huawei European IPR
(86) International application number: PCT/CN2024/126422
(87) International publication number: WO 2025/156733

(57) **Abstract**

This application provides a communication method and apparatus, and relates to the field of communication technologies. The method includes: sending first information at a first moment, where the first information indicates first data, and the first data is to-be-transmitted data; and when a first time period overlaps a first measurement time period, monitoring second information on a physical downlink control channel PDCCH monitoring occasion in a second time period, where the second information indicates a first uplink resource, a start moment of the first time period is equal to or later than the first moment, and the second time period includes a first overlapping time period or the first measurement time period. The first overlapping time period is a time period in which the first time period overlaps the first measurement time period. The first measurement time period is determined based on a first configuration, and the first configuration is a configuration for sending a first reference signal by a candidate cell.

## Description

This application claims priority to Chinese Patent Application No. 202410119211.0, filed with the China National Intellectual Property Administration on January 26, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may measure a reference signal of a neighboring cell in a specific time period, for example, a measurement gap (measurement gap, MG), to obtain a measurement result of the reference signal, and then perform cell handover based on the measurement result of the reference signal. In addition, when measuring the reference signal, the terminal device does not perform data transmission with a network device corresponding to a current cell. This increases data transmission delay and affects service transmission performance.

### SUMMARY

To resolve the foregoing technical problem, this application provides a communication method and apparatus, to reduce impact of reference signal measurement on data transmission, and improve service transmission performance. To achieve the foregoing objective, the following technical solutions are used in this application.

According to a first aspect, a communication method is provided. The method may be performed by a terminal device, may be performed by a component (for example, a processor, a chip, or a chip system) in the terminal device, or may be performed by a logical module or software that can implement all or some functions of the terminal device. The following uses an example in which the method is performed by the terminal device for description. The method includes:

The terminal device sends first information at a first moment, where the first information indicates first data, and the first data is to-be-transmitted data.

When a first time period overlaps a first measurement time period, the terminal device monitors second information on a physical downlink control channel PDCCH monitoring occasion in a second time period, where the second information indicates a first uplink resource, a start moment of the first time period is equal to or later than the first moment, and the second time period includes at least one of the following: a first overlapping time period or the first measurement time period. The first overlapping time period is a time period in which the first time period overlaps the first measurement time period. The first measurement time period is determined based on a first configuration, and the first configuration is a configuration for sending a first reference signal by a candidate cell.

For example, the first configuration is a measurement gap MG configuration, and the first measurement time period is a time period corresponding to one MG.

For another example, the first configuration is a synchronization signal-based measurement timing configuration SMTC, and the first measurement time period is a time period corresponding to one SMTC.

In other words, after the terminal device sends the first information at the first moment, even if the first time period overlaps the first measurement time period, the terminal device still performs a normal operation in the second time period, for example, monitors the second information on the PDCCH monitoring occasion in the second time period, to learn of the first uplink resource in a timely manner, and perform transmission of the first data by using the first uplink resource.

The second time period includes the first overlapping time period, namely, the time period in which the first time period overlaps the first measurement time period. Alternatively, the second time period includes the first measurement time period. In comparison with a case in which the terminal device measures the first reference signal in the first measurement time period and monitors the second information after the first measurement time period, in this application, the terminal device monitors the second information instead of measuring the reference signal on the PDCCH monitoring occasion in the second time period. In this way, impact of reference signal measurement on data transmission is reduced. This helps reduce service data transmission delay and improve service transmission performance.

In a possible design, when the second time period includes the first overlapping time period, the PDCCH monitoring occasion in the second time period includes a time period in which the first overlapping time period overlaps a first monitoring time period, where the first monitoring time period is determined based on a second configuration, and the second configuration is used to determine a PDCCH monitoring time period.

For example, the second configuration is a discontinuous reception DRX configuration. Correspondingly, the first monitoring time period is an active time period in the DRX configuration. Alternatively, the second configuration is used to configure a search space or a search space set.

For another example, after sending the first information at the first moment, the terminal device continuously performs PDCCH monitoring in the first monitoring time period.

In other words, the PDCCH monitoring occasion in the second time period is determined based on the first time period, the first measurement time period, and the first monitoring time period.

In a possible design, the terminal device may perform PDCCH monitoring in the first time period, namely, assign the first time period a PDCCH monitoring function. It may be understood as that the first network device may send downlink control information DCI through a PDCCH in the first time period, or the terminal device continuously performs PDCCH monitoring in the first time period.

In a possible design, the method further includes: The terminal device does not measure the first reference signal in the second time period, where a measurement result of the first reference signal indicates signal quality of the candidate cell. In this way, impact of the reference signal measurement on service transmission delay is reduced.

In a possible design, the method further includes: When the second time period includes the first overlapping time period, the terminal device measures the first reference signal in a third time period, where a start moment of the third time period is a second moment, the second moment is equal to or later than an end moment of the first time period, and an end moment of the third time period is an end moment of the first measurement time period.

In other words, the terminal device measures the first reference signal in a time period after the second time period, for example, the third time period. This helps improve reference signal measurement performance and resource utilization.

In a possible design, when the second moment is later than the end moment of the first time period, there is a fourth time period between the second moment and the end moment of the first time period.

In a possible design, the method further includes: The terminal device receives first configuration information, where the first configuration information indicates the first configuration, so that the terminal device determines the first measurement time period based on the first configuration.

In a possible design, the first time period is greater than or equal to a sum of N first measurement time periods, where N is a positive integer.

In a possible design, the first time period is preconfigured. Alternatively, the first time period is configured by a first communication apparatus. Alternatively, the first time period is determined based on the first data.

In a possible design, the first time period is determined by using a first timer, and the first timer is a timer started in response to the sending of the first information.

In a possible design, when the start moment of the first time period is later than the first moment, there is a fifth time period between the start moment of the first time period and the first moment.

In a possible design, the first data is all to-be-transmitted data corresponding to a first logical channel group LCG, and the first LCG is one or more of at least one LCG.

In a possible design, the first data is data whose remaining delay budget is less than a first delay threshold in a first LCG, the first LCG is one or more of at least one LCG, and the first delay threshold is a parameter configured by using second configuration information.

In a possible design, that the first information indicates the first data includes: The first information indicates at least one of the following: a first data amount, first delay information, or a first parameter. The first data amount is a data amount of the first data. The first delay information is delay information of second data, and the second data is data with a shortest remaining delay budget in the first data. The first parameter indicates a first buffer status list, the first buffer status list includes at least one index, and one of the at least one index indicates a data amount of the first data.

In a possible design, the first information includes a scheduling request SR, and the SR is used to request an uplink resource for transmission of the first data. Alternatively, the first information includes a delay status report DSR, and the DSR indicates delay of the first data. Alternatively, the first information includes a buffer status report BSR, and the BSR indicates the data amount of the first data.

In a possible design, the method further includes: The terminal device sends third information in the second time period, where the third information indicates third data or uplink control information. This helps reduce uplink transmission delay.

In a possible design, a priority of the first time period is a first priority, a priority of the first measurement time period is a second priority, the first priority is higher than the second priority, and the second priority is determined based on the first configuration.

In other words, when the first time period overlaps the first measurement time period, the terminal device monitors the second information on the PDCCH monitoring occasion in the second time period or does not measure the first reference signal, to preferentially ensure the service transmission performance.

In a possible design, the second priority is lower than or equal to a first threshold.

According to a second aspect, a communication method is provided. The method may be performed by a terminal device, may be performed by a component (for example, a processor, a chip, or a chip system) in the terminal device, or may be performed by a logical module or software that can implement all or some functions of the terminal device. The following uses an example in which the method is performed by the terminal device for description. The method includes:

The terminal device sends first information at a first moment, where the first information indicates first data, and the first data is to-be-transmitted data.

When a first overlapping time period does not exist, and a start moment of a first measurement time period arrives, the terminal device starts the first measurement time period.

The first overlapping time period is a time period in which a first time period overlaps the first measurement time period, a start moment of the first time period is equal to or later than the first moment, the first measurement time period is determined based on a first configuration, and the first configuration is a configuration for sending a first reference signal by a candidate cell.

That the first overlapping time period does not exist means that the first time period does not overlap the first measurement time period.

Starting the first measurement time period may be understood as that the terminal device measures the first reference signal in the first measurement time period.

In other words, the terminal device determines, depending on whether the first overlapping time period exists, whether to start the first measurement time period, namely, whether to measure the first reference signal in the first measurement time period. When the first overlapping time period does not exist, the terminal device may start the first measurement time period in a timely manner to measure the reference signal of the candidate cell. In this way, accuracy of reference signal measurement is improved, and service data transmission delay is not affected.

According to a third aspect, a communication method is provided. The method may be performed by a network device, may be performed by a component (for example, a processor, a chip, or a chip system) in the network device, or may be performed by a logical module or software that can implement all or some functions of the network device. The following uses an example in which the method is performed by the network device for description. The method includes:
The network device receives first information at a first moment, where the first information indicates first data, and the first data is to-be-transmitted data.

The network device determines a first time period based on the first information. When the first time period overlaps a first measurement time period, the network device sends second information on a physical downlink control channel PDCCH monitoring occasion in a second time period, where the second information indicates a first uplink resource, and the second time period includes at least one of the following: a first overlapping time period or the first measurement time period. The first overlapping time period is a time period in which the first time period overlaps the first measurement time period. The first measurement time period is determined based on a first configuration, and the first configuration is a configuration for sending a first reference signal by a candidate cell.

In other words, after the network device receives the first information at the first moment, even if the first time period overlaps the first measurement time period, the network device still performs a normal operation in the second time period, for example, sends the second information on the PDCCH monitoring occasion in the second time period, to indicate the first uplink resource to a terminal device in a timely manner, so that the terminal device performs transmission of the first data by using the first uplink resource.

The second time period includes the first overlapping time period, namely, the time period in which the first time period overlaps the first measurement time period. Alternatively, the second time period includes the first measurement time period. In comparison with a case in which the network device sends the second information after the first measurement time period, in this application, the network device sends the second information on the PDCCH monitoring occasion in the second time period, so that the terminal device learns of the first uplink resource as early as possible. This helps reduce service data transmission delay and improve service transmission performance.

In a possible design, the method further includes: The network device receives third information in the second time period, where the third information indicates third data or uplink control information.

In a possible design, when the second time period includes the first overlapping time period, the PDCCH monitoring occasion in the second time period includes a time period in which the first overlapping time period overlaps a first monitoring time period, where the first monitoring time period is determined based on a second configuration, and the second configuration is used to determine a PDCCH monitoring time period.

In a possible design, the first time period is greater than or equal to a sum of N first measurement time periods, where N is a positive integer.

In a possible design, the first time period is preconfigured. Alternatively, the first time period is configured by a first communication apparatus. Alternatively, the first time period is determined based on the first data.

In a possible design, the first time period is determined by using a first timer, and the first timer is a timer started in response to the receiving of the first information.

In a possible design, when a start moment of the first time period is later than the first moment, there is a fifth time period between the start moment of the first time period and the first moment.

In a possible design, the first data is all to-be-transmitted data corresponding to a first logical channel group LCG, and the first LCG is one or more of at least one LCG.

In a possible design, the first data is data whose remaining delay budget is less than a first delay threshold in a first LCG, the first LCG is one or more of at least one LCG, and the first delay threshold is a parameter configured by using second configuration information.

In a possible design, that the first information indicates the first data includes: The first information indicates at least one of the following: a first data amount, first delay information, or a first parameter. The first data amount is a data amount of the first data. The first delay information is delay information of second data, and the second data is data with a shortest remaining delay budget in the first data. The first parameter indicates a first buffer status list, the first buffer status list includes at least one index, and one of the at least one index indicates a data amount of the first data.

In a possible design, the first information includes a scheduling request SR, and the SR is used to request an uplink resource for transmission of the first data. Alternatively, the first information includes a delay status report DSR, and the DSR indicates delay of the first data. Alternatively, the first information includes a buffer status report BSR, and the BSR indicates the data amount of the first data.

According to a fourth aspect, a communication apparatus is provided to implement the foregoing methods. The communication apparatus includes a corresponding module, unit, or means (means) for implementing the methods. The module, the unit, or the means may be implemented by using hardware or software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to a fifth aspect, a communication apparatus is provided, and is configured to implement the method according to any one of the foregoing aspects or the possible designs of any one of the foregoing aspects.

According to a sixth aspect, a communication apparatus is provided, and includes a processor. The processor is configured to execute a computer program or instructions, so that the communication apparatus performs the method according to any one of the foregoing aspects or the possible designs of any one of the foregoing aspects. Optionally, the communication apparatus further includes a memory. The memory may be coupled to the processor, or the memory may be independent of the processor. For example, the memory and the processor are two independent modules. The memory may be located outside the communication apparatus, or may be located inside the communication apparatus.

According to a seventh aspect, a computer-readable storage medium is provided. The computer-readable storage medium stores a computer program or instructions. When the computer program or the instructions are run, the method according to any one of the foregoing aspects or the possible designs of any one of the foregoing aspects is performed.

According to an eighth aspect, a computer program product including instructions is provided. When the computer program product runs, the method according to any one of the foregoing aspects or the possible designs of any one of the foregoing aspects is performed.

The communication apparatus provided in any one of the fourth aspect to the eighth aspect may be the terminal device in the first aspect or the second aspect, or a component included in the terminal device, for example, a chip or a chip system. Alternatively, the communication apparatus may be the network device in the third aspect, or a component included in the network device, for example, a chip or a chip system. When the apparatus is a chip system, the apparatus may include a chip, or may include the chip and another discrete device.

It may be understood that when the communication apparatus provided in any one of the fourth aspect to the eighth aspect is a chip, a sending action/function of the communication apparatus may be understood as outputting information, and a receiving action/function of the communication apparatus may be understood as inputting information.

According to a ninth aspect, a communication apparatus is provided, and is configured to implement the method according to any one of the foregoing aspects or the possible designs of any one of the foregoing aspects. Optionally, the communication apparatus includes a terminal device, a network device, a chip system, or a chip.

For technical effects brought by any design manner in the fourth aspect to the ninth aspect, refer to technical effects brought by different design manners in the first aspect. Details are not described herein again.

### BRIEF DESCRIPTION OF DRAWINGS

FIG. 1 is a diagram of an architecture of a communication system according to an embodiment of this application;
FIG. 2 is a diagram of a structure of a buffer status report according to an embodiment of this application;
FIG. 3 is a diagram of a structure of another buffer status report according to an embodiment of this application;
FIG. 4 is a diagram of a structure of a status report according to an embodiment of this application;
FIG. 5 is a diagram of a data transmission scenario according to an embodiment of this application;
FIG. 6 is a schematic flowchart of a communication method according to an embodiment of this application;
FIG. 7 is a diagram of a control channel monitoring scenario according to an embodiment of this application;
FIG. 8 is a diagram of another control channel monitoring scenario according to an embodiment of this application;
FIG. 9 is a diagram of still another control channel monitoring scenario according to an embodiment of this application;
FIG. 10 is a diagram of still another control channel monitoring scenario according to an embodiment of this application;
FIG. 11 is a schematic flowchart of another communication method according to an embodiment of this application;
FIG. 12 is a schematic flowchart of still another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of another communication apparatus according to an embodiment of this application.

### DESCRIPTION OF EMBODIMENTS

The following describes technical solutions in this application with reference to the accompanying drawings.

For ease of understanding embodiments of this application, before this application is described, the following descriptions are first provided.
1. In this application, terms "system" and "network" are interchangeable. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In this application, words such as "example" and "for example" mean giving an example, an illustration, or a description. Any embodiment or design scheme described as an "example" in this application should not be explained as being more preferred or having more advantages than another embodiment or design scheme. Exactly, use of the word example is intended to present a concept in a specific manner.

In this application, "of (of)", "relevant (relevant)", and "corresponding (corresponding)" may be interchangeably used sometimes. It should be noted that meanings expressed by the terms are consistent when differences between the terms are not emphasized.

In this application, for ease of description, when numbering is involved, numbering may be performed consecutively starting from 1, may be performed consecutively starting from 0, or may be performed starting from any parameter. It should be understood that the foregoing descriptions are all settings for ease of describing the technical solutions provided in embodiments of this application, but are not intended to limit the scope of embodiments of this application.

2. In embodiments of this application, an "indication" may include a direct indication and an indirect indication, or may include an explicit indication and an implicit indication. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to a conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for sending separately, and sending periodicities and/or sending occasions of these pieces of sub-information may be the same or different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, media access control layer signaling, and physical layer signaling. The radio resource control signaling may include RRC (radio resource control) signaling, the media access control layer signaling may include a media access control control element (media access control control element, MAC CE), and the physical layer signaling may include downlink control information (downlink control information, DCI).

3. "Pre-definition" or "pre-configuration" may be implemented by pre-storing, in a device (for example, including a terminal device), corresponding code, a table, or another manner that may indicate related information. A specific implementation of the "pre-definition" or "pre-configuration" is not limited in embodiments of this application. "Storing" may mean "being stored" in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

4. A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in embodiments of this application.

5. In embodiments of this application, descriptions such as "when...", "in a case of...", and "if" all mean that the device (for example, the terminal device) performs corresponding processing in an objective case, and are not limited to time, and the device (for example, the terminal device) is not required to perform a determining action during implementation. This does not mean that there is another limitation.

6. In descriptions of this application, unless otherwise specified, "/" represents an "or" relationship between associated objects. For example, A/B may represent A or B. "And/or" in embodiments of this application describes only an association relationship for describing associated objects and represents that three relationships may exist. For example, A and/or B may represent the following three cases: only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

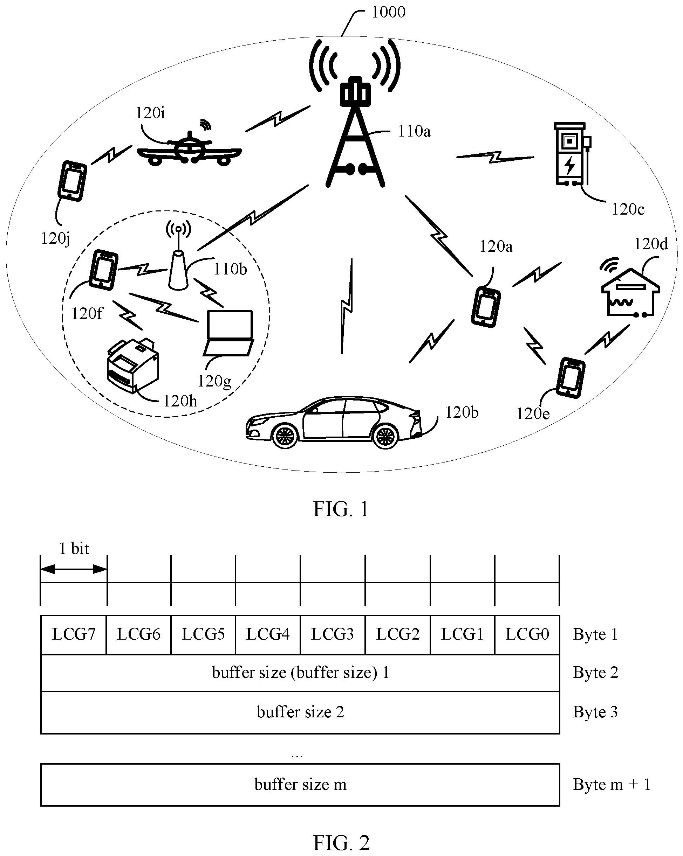

FIG. 1 is a diagram of an architecture of a communication system 1000 to which embodiments of this application are applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, the communication system 1000 may further include another network device. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different physical devices independent of each other, functions of the core network device and logical functions of the network device may be integrated into a same physical device, or some functions of the core network device and some functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may alternatively be a module or a unit that completes some functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or a CU-CP and a CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user. For example, the terminal device may include a handheld device having a wireless connection function or a processing device connected to a wireless modem. The terminal device may communicate with the core network through the radio access network, exchange a voice or data with the RAN, or exchange the voice and the data with the RAN. The terminal device may include user equipment (user equipment, UE), a wireless terminal device, a mobile terminal device, a D2D terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may include a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device having relatively low power consumption, a device having a limited storage capability, or a device having a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with the base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

It should be understood that the network device and the terminal device may be at fixed positions, or may be movable. The network device and the terminal device may be deployed on the land, including an indoor device, an outdoor device, a handheld device, or a vehicle-mounted device, may be deployed on the water surface, or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network via 120i, the terminal device 120i is a network device. However, for the network device 110a, 120i is a terminal device. In other words, 110a and 120i communicate with each other according to a radio air interface protocol. Certainly, 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication may be performed between the network device and the terminal device, between the network devices, and between the terminal devices by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When the terminal device communicates with the serving cell, the terminal device is further interfered by a signal from a neighboring cell.

Unless otherwise specified, the "network device" in this application may be the network device, may be a component (for example, a processor, a chip, or a chip system) in the network device, or may be a logical module or software that can implement all or some functions of the network device.

Unless otherwise specified, the "terminal device" in this application may be the terminal device, may be a component (for example, a processor, a chip, or a chip system) in the terminal device, or may be a logical module or software that can implement all or some functions of the terminal device.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

### 1. Extended reality (eXtended Reality, XR) professional (professional, pro) service

The XR pro service is a delay-sensitive service. In other words, the XR pro service has a high delay requirement.

For example, for an XR frame, a downlink transmission delay budget of the XR frame is usually 10 milliseconds (ms). In other words, maximum transmission time of service data corresponding to the XR frame on an air interface is 10 ms. For example, calculation starts from a moment at which the XR frame first arrives at a user plane function (user plane function, UPF) network element, and all service data of the XR frame needs to be successfully received by the terminal device within 10 ms.

For another example, for an XR frame, an uplink transmission delay budget of the XR frame is usually 30 milliseconds (ms). In other words, maximum transmission time of service data corresponding to the XR frame on an air interface is 30 ms. For example, calculation starts from a moment at which the XR frame first arrives at the terminal device, and all service data of the XR frame needs to be successfully received by the network device (for example, a base station or a UPF network element) within 30 ms.

It should be noted that a real-time broadband interaction (real-time broadband communication, RTBC) scenario of the 5th generation mobile communication technology (5th generation mobile communication technology, 5G) aims to implement low-delay, high-reliability, and high-bandwidth communication interaction, and uses low-delay, high-reliability, and high-bandwidth as a target to ensure an immersive experience effect during interaction between a person and a virtual world. Therefore, the XR pro service having the high delay requirement may be used as a typical service in the RTBC scenario.

In some embodiments, the XR pro service may be used for transmission of a plurality of types of data, for example, video data, audio data, or tactile data. The following describes the video data by using an example. The video data may include several ultra-high-definition images (for example, an image captured by a camera, or an image of field of view content), and compression and coding, for example, high efficiency video coding (high efficiency video coding, HEVC), are performed on each image, to generate a large data block. If the video data has a higher definition requirement, a larger data block is obtained by encoding the video data.

The video data usually has a specific periodicity, for example, transmission of the video data is performed at a periodicity of 60 Hz or 90 Hz. As a result, a challenge is posed to a system capacity and scheduling. For example, the network device (for example, the base station) needs to periodically reserve a large quantity of resources for scheduling.

In some embodiments, data of the XR pro service may be downlink data. For example, a server sends the data of the XR pro service to an XR device via the network device.

In some embodiments, data of the XR pro service may alternatively be uplink data. For example, an XR device sends the data of the XR pro service to the network device. This is not limited in this application.

### 2. Buffer status report (buffer status report, BSR)

The BSR includes a data amount of to-be-transmitted data (pending data). In an uplink data transmission scenario, the terminal device may report the BSR to the network device. Correspondingly, the network device may receive the BSR from the terminal device, so that the network device can properly allocate an uplink resource to the terminal device based on the data amount of the to-be-transmitted data, to properly schedule the uplink resource.

For example, for the XR pro service, the terminal device may be an XR device. In an uplink cellular transmission scenario, the XR device may generate a BSR based on a data amount of the data of the XR pro service, and report the BSR to the network device. In this way, the network device may properly allocate an uplink resource to the XR pro service of the terminal device based on the data amount that is of the data of the XR pro service and that is indicated by the BSR, to properly schedule the uplink resource.

The BSR is a media access control (media access control, MAC) control element (control element, CE), and therefore may also be referred to as a BSR MAC CE.

It should be noted that, in this application, the to-be-transmitted data is described as follows: The to-be-transmitted data may be a protocol data unit (protocol data unit, PDU), or the to-be-transmitted data may be a protocol data unit group (PDU set), or the to-be-transmitted data may be a data burst (data burst).

The PDU set includes at least one PDU. Different PDUs in one PDU set carry information elements generated by one application (or application layer). For example, a video frame with a large data amount usually needs to be divided into a plurality of PDUs for transmission.

One data burst may be understood as at least one PDU generated and sent by the application (or application layer) in short time. Different PDUs of a same data burst may come from one or more PDU sets.

When the to-be-transmitted data is understood as one PDU set (or data burst), a moment at which the to-be-transmitted data arrives at the terminal device may be understood as a moment at which one PDU in the PDU set (or data burst) arrives at the terminal device, and is usually a moment corresponding to a PDU that is in the PDU set (or data burst) and that first arrives at the terminal device. It should be understood that the PDU that first arrives at the terminal device may be the 1^{st} PDU in the PDU set (or data burst) according to a generation or sending sequence, or may be a non-first PDU in the PDU set (or data burst) according to a generation or sending sequence, for example, the 2^{nd} PDU. This is not limited in embodiments of this application.

The following describes structures of some BSRs by using examples.

For example, a structure of a long BSR may be shown in FIG. 2. In FIG. 2, a long BSR may perform transmission of a data amount of to-be-transmitted data in a plurality of logical channel groups (logical channel groups, LCGs) by using one BSR. The long BSR may include eight bytes, and each byte corresponds to one LCG. One byte (for example, a byte 1 in which an LCG0 to an LCG7 are located) of the BSR indicates whether the BSR includes a data amount of to-be-transmitted data in an LCG corresponding to the byte, or one byte of the BSR indicates whether a data amount of to-be-transmitted data in an LCG corresponding to the byte is reported in the BSR.

If a bit corresponding to an LCGi (for example, i = 0) in the BSR is '1', it may indicate that the BSR includes a data amount of to-be-transmitted data in the LCG0, and the BSR further includes one field, where the field indicates the data amount of the to-be-transmitted data in the LCG0. In FIG. 2, if the BSR includes a data amount of to-be-transmitted data in m LCGs, or bits corresponding to the m LCGs are set to 1, a size of the BSR is m + 1 octal characters or m + 1 bytes, where m is a positive integer.

If a bit corresponding to an LCGi (for example, i = 0) in the BSR is '0', it may indicate that the BSR does not include a data amount of to-be-transmitted data in the LCG0, and the BSR does not include a field indicating the data amount of the to-be-transmitted data in the LCG0. It may be understood as that the field indicating the data amount of the to-be-transmitted data in the LCG0 does not appear in the BSR, or it may be understood as that a bit width of the field indicating the data amount of the to-be-transmitted data in the LCG0 is 0 bits.

For example, in FIG. 2, the field indicating the data amount of the to-be-transmitted data in the LCG0 may be a buffer size (buffer size) field. Generally, the buffer size field includes eight bits, and the buffer size field indicates an index (index) in a buffer status table instead of a value of a data amount. In this way, the network device may determine a value of a data amount (BS value) from the buffer status table based on the index. For example, it is assumed that a buffer status table corresponding to the long BSR is shown in Table 1. If a data amount of to-be-transmitted data in a logical channel corresponding to a buffer size is determined according to Table 1, a value of the buffer size may be converted into a decimal value ranging from 0 to 255. In this way, the data amount of the to-be-transmitted data in the logical channel corresponding to the buffer size may be determined from Table 1 based on the value of the buffer size (namely, a decimal index value).

**Table 1**

| Index (Index) | Data amount (BS value) | Index (Index) | Data amount (BS value) | Index (Index) | Data amount (BS value) | Index (Index) | Data amount (BS value) |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | < 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

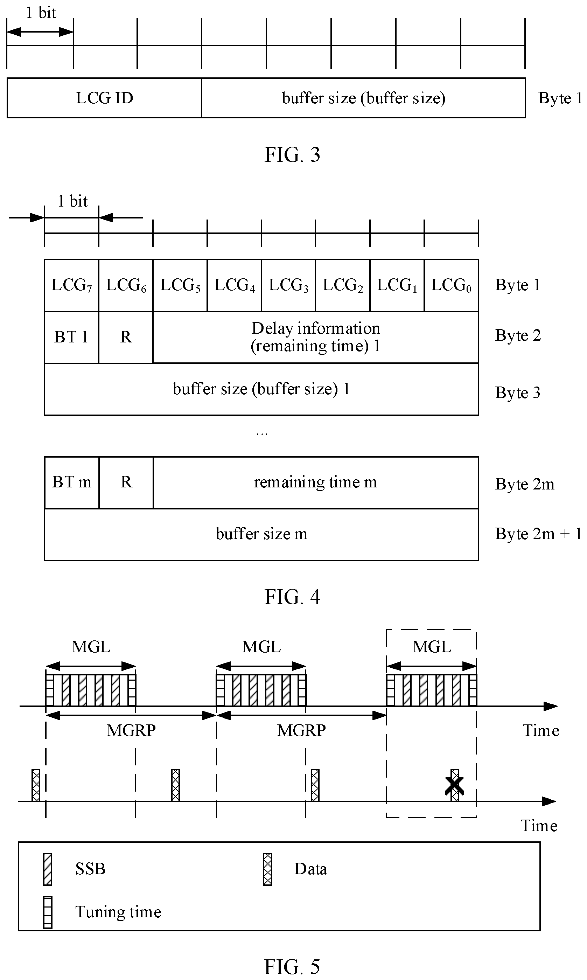

For example, a structure of a short BSR may be shown in FIG. 3. In FIG. 3, a short BSR may alternatively perform transmission of a data amount of to-be-transmitted data in a plurality of logical channels in one LCG by using one BSR. The short BSR may alternatively include eight bits. The first three bits indicate an LCG identity (identity, ID), and the LCG ID may be used to identify an LCG. The last five bits indicate a buffer size, and the buffer size indicates a data amount of to-be-transmitted data in the LCG corresponding to the LCG ID.

For the buffer size in the short BSR, the buffer size may also indicate one index. For example, it is assumed that a buffer status table corresponding to the short BSR is shown in Table 2. If a data amount of to-be-transmitted data in a logical channel corresponding to the buffer size is determined according to Table 2, a value of the buffer size may also be converted into a decimal value ranging from 0 to 31. In this way, the network device may determine, from Table 2 based on the value of the buffer size (namely, a decimal index value), the data amount of the to-be-transmitted data in the logical channel corresponding to the buffer size.

**Table 2**

| Index (Index) | Data amount (BS value) | Index (Index) | Data amount (BS value) | Index (Index) | Data amount (BS value) | Index (Index) | Data amount (BS value) |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

Currently, there are a plurality of BSR triggering manners, which are separately described below.

Triggering manner 1: A BSR is triggered when any one of the following conditions is met.

New data arrives at an LCH in an LCG, the new uplink data is available to a MAC entity, and a priority of the LCH is higher than a priority of any other LCH having to-be-transmitted data.

Alternatively, new data arrives at an LCH in an LCG, the new uplink data is available to a MAC entity, and there is no uplink data that can be sent on any LCH in any other LCG.

That the data is available to the MAC entity may be understood as that the data may be used, obtained, or allocated by the MAC entity. For example, the MAC entity may multiplex the data into a MAC protocol data unit (protocol data unit, PDU).

Triggering manner 2: The network device (for example, the base station) configures one retransmission BSR timer (retxBSR-timer) for the terminal device via signaling. The timer is used to prevent a case in which the base station does not allocate a corresponding uplink resource after the terminal device sends a BSR, resulting in the terminal device waiting for the uplink resource continuously and falling into a deadlock. After the timer expires, the BSR is triggered.

The BSR triggered in the triggering manner 1 or triggering manner 2 is generally referred to as a regular BSR (regular BSR).

In addition, if an uplink resource, for example, an uplink MAC protocol data unit (protocol data unit, PDU), can completely accommodate a BSR MAC CE and a MAC CE packet header corresponding to the BSR MAC CE after multiplexing is performed based on a logical channel multiplexing priority, the retransmission BSR timer is also started or restarted.

The logical channel multiplexing priority is used to determine an order of performing multiplexing into the uplink resource. When determining specific signaling or data that may be carried on one uplink resource, the terminal device may multiplex the signaling or the data into the uplink resource based on a sequence of logical channel multiplexing priorities of the signaling or the data.

Triggering manner 3: The network device (for example, the base station) configures one periodic BSR timer (periodicBSR-Timer) for the terminal device via RRC signaling. After the timer expires, a BSR is triggered.

The BSR triggered in the triggering manner 3 is usually referred to as a periodic BSR (periodic BSR).

In addition, when the terminal device triggers and reports a regular BSR due to other reasons, the periodic BSR timer is reset.

Triggering manner 4: After the terminal device fills a MAC PDU based on logical channel multiplexing priorities of a MAC CE and data, if a quantity of remaining bits of the MAC PDU is greater than or equal to a size of a BSR MAC CE and a sub-packet header of the BSR MAC CE, a BSR is triggered, and the terminal device may perform transmission of the BSR by using the quantity of remaining bits of the MAC PDU.

The BSR triggered in the triggering manner 4 is usually referred to as a padding BSR (padding BSR).

The regular BSR, the periodic BSR, and the padding BSR may be understood as different BSRs logically, and names of the BSRs are determined based on different triggering manners of the BSRs respectively. It may be understood that classifying BSRs based on triggering manners and classifying BSRs based on formats are two manners of classifying BSRs from different dimensions.

A format of a BSR may be determined in the following manner.

When a MAC PDU is assembled/generated, the MAC PDU includes a BSR MAC CE, and the BSR MAC CE is triggered by using a regular BSR or a periodic BSR. If there is more than one LCG having to-be-transmitted data in this case, a long BSR MAC CE is sent, where the long BSR MAC CE includes data amounts on all LCGs having to-be-transmitted data. If there is no more than one LCG having to-be-transmitted data, a short BSR MAC CE is sent.

When the BSR MAC CE included in the MAC PDU is triggered by using a padding BSR, if a data amount of remaining bits is greater than a size of a long BSR MAC CE and a sub-packet header of the BSR MAC CE, the long BSR MAC CE is reported. If a data amount of remaining bits is equal to a size of a short BSR MAC CE and a sub-packet header of the short BSR MAC CE and is less than a size of a long BSR MAC CE and a sub-packet header of the long BSR MAC CE, and if there is more than one LCG having to-be-transmitted data, a short truncated BSR MAC CE is reported. If a data amount of remaining bits is greater than a size of a short BSR MAC CE and a sub-packet header of the short BSR MAC CE and is less than a size of a long BSR MAC CE and a sub-packet header of the long BSR MAC CE, and if there is more than one LCG having to-be-transmitted data, a long truncated BSR is reported.

A format of the short truncated BSR MAC CE is the same as a format of the short BSR MAC CE, as shown in FIG. 3, but content in a sub-packet header of the short truncated BSR MAC CE, for example, a logical channel identity (logical channel identity, LCID), is different from content in the sub-packet header of the short BSR MAC CE. A format of the long truncated BSR MAC CE is the same as a format of the long BSR MAC CE, as shown in FIG. 2, but content in a sub-packet header of the long truncated BSR MAC CE is different from content in the sub-packet header of the long BSR MAC CE. In addition, LCGs to which data included in the long truncated BSR belongs are reported in descending order of priorities of the LCGs. The priorities of the LCGs may be determined based on priorities of LCHs in the LCGs. When the priorities of the LCGs are the same, the LCGs are sorted in ascending order of logical channel group identities (logical channel group identities, LCGIDs).

The following describes some possible conditions for canceling triggering a BSR by using examples.

Condition 1: An uplink resource (for example, a MAC protocol data unit (protocol data unit, PDU)) can carry all to-be-transmitted data, but the uplink resource cannot carry a BSR that includes a data amount of all the to-be-transmitted data and a sub-packet header of the BSR.

Condition 2: An uplink resource carries a BSR (for example, a long BSR, an extended long BSR, a short BSR, or an extended short BSR) of a preset type, and the BSR includes target information. The target information is a buffer status when the BSR is triggered last time before the uplink resource is assembled. The buffer status is a data amount of to-be-transmitted data.

If any terminal device meets the condition 1 and/or the condition 2, all triggered BSRs of the terminal device are canceled.

### 3. Delay status report (delay status report, DSR)

The DSR includes delay information of to-be-transmitted data. In an uplink data transmission scenario, the terminal device may report the DSR to the network device. Correspondingly, the network device may receive the DSR from the terminal device, so that the network device can properly allocate an uplink resource to the terminal device based on the delay information of the to-be-transmitted data, in other words, properly schedule the uplink resource.

The delay information of the to-be-transmitted data may include a remaining transmission delay budget of the to-be-transmitted data, storage duration of the to-be-transmitted data, a transmission time point of the to-be-transmitted data, or the like. This is not limited in this application.

Optionally, the DSR may also indicate a data amount of the to-be-transmitted data. It may be understood that, if the DSR can indicate both the data amount of the to-be-transmitted data and the delay information of the to-be-transmitted data, the DSR may also be understood as a BSR with a new function expanded based on an original function.

It should be noted that the DSR is merely an example name temporarily provided, and the report carrying the delay information of the to-be-transmitted data may also have another name. This is not limited in embodiments of this application.

It should be noted that the DSR may also be a MAC CE, and may be referred to as a DSR MAC CE.

For example, some possible DSR triggering manners are described as follows:
The DSR is triggered based on the remaining transmission delay budget of the to-be-transmitted data. It may be understood as that the DSR may also be triggered because the remaining transmission delay budget of the to-be-transmitted data is less than or equal to a threshold.

For example, the terminal device receives threshold information, and the threshold information indicates one threshold. When a remaining transmission delay budget of to-be-transmitted data of the terminal device reaches (is less than or equal to) the threshold, a DSR is triggered.

In this application, the remaining transmission delay budget may be understood as duration. A start moment of the remaining transmission delay budget is a current system moment, and an end moment of the remaining transmission delay budget is a moment at which a transmission delay budget of the to-be-transmitted data is about to expire or a moment at which the to-be-transmitted data is about to be discarded.

The transmission delay budget is described as follows:
For example, the transmission delay budget may be a packet delay budget (packet delay budget, PDB) corresponding to the to-be-transmitted data. A PDB may be understood as a delay requirement from the terminal device to the base station or to the user plane function (user plane function, UPF) network element, in other words, duration from time when a PDU arrives at the terminal device to time when the PDU is successfully received by the base station or the UPF network element. Generally, the PDB is configured by the core network (core network, CN) by using a 5G quality of service (quality of service, QoS) identifier (5G QoS identifier, 5QI).

For another example, the transmission delay budget may be a PDU set delay budget (PDU set delay budget, PSDB) timeout corresponding to the to-be-transmitted data. A PSDB may be understood as a transmission delay requirement of one PDU set, for example, duration from time when a PDU in one PDU set first arrives at the terminal device to time when all PDUs in the PDU set are successfully received by the base station or the UPF network element.

The moment at which the to-be-transmitted data is about to be discarded is described as follows:
The moment at which the to-be-transmitted data is about to be discarded may be understood as a moment corresponding to expiration of a packet discard timer corresponding to the to-be-transmitted data.

For example, a PDCP layer configures one packet discard timer for each service data unit (service data unit, SDU). When an SDU from a higher layer arrives at the PDCP layer, the packet discard timer is started for a PDCP SDU. When the packet discard timer expires, the corresponding SDU or PDU is discarded.

In this application, for uplink transmission, the start moment of the transmission delay budget of the to-be-transmitted data may be understood as a moment at which the to-be-transmitted data arrives at the terminal device, for example, a moment at which the to-be-transmitted data arrives at an access stratum (access stratum, AS) layer, a moment at which the to-be-transmitted data arrives at a service data adaptation protocol (service data adaptation protocol, SDAP) layer, a moment at which the to-be-transmitted data arrives at the packet data convergence protocol (packet data convergence protocol, PDCP) layer, a moment at which the to-be-transmitted data arrives at a radio link control (radio link control, RLC) layer, a moment at which the to-be-transmitted data arrives at a logical channel (logical channel, LCH), or a moment at which the to-be-transmitted data arrives at a media access control (media access control, MAC) layer. This is not limited in embodiments of this application.

It should be noted that, in the foregoing DSR triggering process, each related threshold may be preconfigured in the terminal device before delivery from the factory, or may be configured based on higher layer signaling (for example, an RRC message). This is not limited in this application. When the threshold is related to delay, a unit of the threshold may be any time unit, for example, millisecond, or may be a time domain resource-related unit, for example, a slot, a subframe, or a system frame. This is not limited in this application. When the threshold is related to a data amount, a unit of the threshold may be a bit, a byte, or the like. This is not limited in this application.

The following describes structures of some DSRs by using examples.

For example, a structure of a DSR may be shown in FIG. 4. In FIG. 4, an LCGi represents whether an LCG corresponding to the LCGi has information to be reported in a MAC CE. For example, when an LCG0 = '1', a DSR MAC CE includes information about the LCG0. The information about the LCG0 may include a data amount of data whose delay information is lower than a threshold in the LCG0, for example, a data amount indicated by a buffer size field. When the data is at a granularity of a PDU set, after delay information of any PDU in the PDU set, for example, a remaining value of a packet discard timer, is less than a threshold, a data amount of data in the entire PDU set is reported in the DSR MAC CE. In addition, the information about the LCG0 may further include delay information, for example, delay indicated by a remaining time field. The remaining time field indicates delay information of data whose remaining transmission delay budget is the shortest and non-zero in the LCG0, and may be an absolute value. In addition, the information about the LCG0 may further include a BT field, and the BT field indicates a buffer status (buffer status, BS) table used for a corresponding buffer size field. Specifically, the buffer size field is 8 bits, and corresponds to 256 indexes, as shown in Table 1. Generally, one LCG corresponds to one long BS table. However, when an additional long BS table is configured for the LCG0, the terminal device needs to notify, by using the BT field, the network device (for example, the base station) of a specific BS table used for a buffer size of the LCG0 in the DSR MAC CE. When no additional BS table is configured for the LCG, the BT field is reserved, or may be understood as a reserved bit.

### 4. Scheduling request (scheduling request, SR)

When the terminal device has to-be-transmitted uplink data, the terminal device sends an SR to the network device, to notify the network device that the terminal device needs an uplink resource to send data. Generally, after receiving the SR, the network device allocates the uplink resource to the terminal device, and sends an uplink grant (uplink grant) to the terminal device, to indicate the terminal device to send a BSR (or a DSR) on the uplink resource indicated by the uplink grant. After receiving the BSR (or the DSR), the network device may allocate an uplink resource to the uplink data based on the BSR (or the DSR), and send an uplink grant to the terminal device again, so that the terminal device can send the uplink data on the uplink resource indicated by the uplink grant sent for the second time.

In some embodiments, if the terminal device triggers the BSR or the DSR, and the triggered BSR or DSR is not canceled, the terminal device may further trigger the SR when an SR triggering condition is met.

The following describes, by using examples, some possible SR triggering conditions in a scenario in which the BSR has been triggered.

Condition 3: A timer configured for a logical channel corresponding to the BSR is not running, and the terminal device currently has no uplink resource used for transmission of the to-be-transmitted data.

Condition 4: A timer configured for a logical channel corresponding to the BSR is not running, an SR-mask corresponding to the logical channel (logicalChannelSR-Mask) is in a false (false) state, and the MAC entity configures uplink resource grant scheduling for the terminal device.

Condition 5: A timer configured for a logical channel corresponding to the BSR is not running, and the terminal device currently has an uplink resource that can be used for transmission of the to-be-transmitted data, but the uplink resource does not meet a parameter requirement (for example, logical channel prioritization (logical channel prioritization, LCP)) of the to-be-transmitted data in the logical channel.

It should be noted that the foregoing condition 3 to condition 5 are mainly applied to a scenario in which the currently triggered BSR is a regular BSR (regular BSR).

In some embodiments, in a process in which the terminal device reports the SR, the terminal device needs to report the SR based on SR configuration information. Generally, the SR configuration information may be obtained via RRC signaling (for example, scheduling Request Config signaling). The SR configuration information may include an SR ID, an SR-prohibit timer (sr-ProhibitTimer), and a maximum SR transmission quantity (sr-TransMax).

The sr-ProhibitTimer indicates that an SR corresponding to the SR configuration information is not sent in a specific time period. The sr-TransMax indicates a maximum quantity of times that the SR can be sent. When a quantity of sending times reaches the sr-TransMax, a random access procedure is initialized. SR IDs are used to distinguish between SR configurations. Each SR configuration has a respective SR ID. The SR ID may be associated with a logical channel (logical channel, LCH) or an LCG.

It should be noted that the network device may configure one SR ID for each LCH or LCG or associate one SR ID to each LCH or LCG. If to-be-transmitted data in one LCH or LCG triggers a regular BSR, and the SR triggering condition is met, the terminal device may trigger the SR. When the quantity of sending times of the SR does not reach the sr-TransMax, the terminal device sends the SR based on an uplink resource corresponding to an SR configuration indicated by the SR ID. In addition, an sr-ProhibitTimer in the SR configuration corresponding to the SR ID is started.

The following describes some possible conditions for canceling triggering a SR by using examples.

Condition 6: An uplink resource can carry all to-be-transmitted data.

Condition 7: An uplink resource carries a BSR (for example, a long BSR or a short BSR) of a target type, and the BSR includes a buffer status when the BSR is triggered last time before the uplink resource is assembled. For example, the buffer status may be a data amount of to-be-transmitted data.

If any terminal device meets the condition 6 and/or the condition 7, all triggered SRs of the terminal device are canceled. In addition, an sr-ProhibitTimer corresponding to each triggered SR is stopped.

In some other embodiments, if the terminal device triggers a DSR, and the triggered DSR is not canceled, the terminal device may further trigger the SR when an SR triggering condition is met.

The following describes some possible SR triggering conditions by using examples.

Condition 8: The terminal device currently has no uplink transmission resource that can be used for new transmission.

Condition 9: An SR-mask (logicalChannelSR-Mask) corresponding to a logical channel is in a false (false) state, and the MAC entity configures uplink resource grant scheduling for the terminal device.

Condition 10: The terminal device currently has an uplink resource that can be used for new transmission, but the uplink resource does not meet a parameter requirement (for example, logical channel prioritization (logical channel prioritization, LCP)) of to-be-transmitted data in a logical channel, or the uplink resource cannot carry a DSR MAC CE and/or a packet header corresponding to the DSR MAC CE.

In addition, the SR triggering condition may further include: A trigger delay timer (for example, logicalChannelSR-DelayTimer) configured for the logical channel corresponding to the DSR is not running.

In some embodiments, in a process in which the terminal device reports the SR, the terminal device needs to report the SR based on SR configuration information. The SR configuration information may include an SR ID, an SR-prohibit timer (sr-ProhibitTimer), and a maximum SR transmission quantity (sr-TransMax). For details, refer to descriptions in the foregoing paragraphs. Details are not described again.

The following describes some possible conditions for canceling triggering a SR by using examples.

Condition 11: An uplink resource can carry all to-be-transmitted data.

Condition 12: An uplink resource carries a DSR, and the DSR includes a buffer status when the DSR is triggered last time before the uplink resource is assembled. For example, the buffer status may be a data amount of to-be-transmitted data.

Condition 13: Triggering of a DSR that triggers the SR has been canceled.

If any terminal device meets the condition 11 and/or the condition 12, all triggered SRs of the terminal device are canceled. In addition, an sr-ProhibitTimer corresponding to each triggered SR is stopped.

### 5. Measurement gap (measurement gap, MG)

The terminal device has specific mobility, and may not camp on one cell for long time. When the terminal device detects that signal quality of a current cell, for example, one or more of reference signal received power (reference signal received power, RSRP), a received signal strength indicator (received signal strength indicator, RSSI), reference signal received quality (reference signal received quality, RSRQ), or a signal to interference plus noise ratio (signal to interference plus noise ratio, SINR), is lower than a threshold or is lower than a threshold for a period of time, the terminal device reports a measurement result, or reports an A2 event (A2 event), to notify that the signal quality of the current cell is lower than the threshold. When the network device receives the signal, the network device considers performing cell handover (handover, HO) for the terminal device, in other words, handing over the terminal device to a neighboring cell. When a signal frequency of another cell is different from a signal frequency of the current cell, the network device configures, for the terminal device, a measurement gap and another measurement parameter, for example, a measurement frequency of the neighboring cell.

Within duration of the MG, the terminal device measures a frequency of the neighboring cell to which the terminal device is to be handed over, for example, measures a synchronization signal/physical broadcast channel block (synchronization signal/physical broadcast channel block, SS/PBCH block, SSB for short) of the neighboring cell. Consequently, the terminal device cannot receive or send data within the duration of the MG. An MG configuration may include several parameters, for example, an MG repetition periodicity (MG repetition periodicity, MGRP), indicating a periodicity of the MG, in other words, the MG appears periodically according to the MGRP, or the terminal device enters the MGRP periodically according to the MGRP. For example, the periodicity of the MGRP may be 20 ms, 40 ms, 80 ms, or 160 ms. Optionally, the MG configuration further includes an MG length (MG length, MGL), indicating the duration of the MG. For example, minimum duration of the MG is 1 ms, and maximum duration of the MG is 20 ms. Therefore, when the terminal device is configured to perform frequent inter-frequency measurement, for example, at a short periodicity (for example, 20 ms), the terminal device needs to frequently enter the MG. Consequently, data transmission is affected, and especially for transmission of an XR-type delay-sensitive service, data transmission performance is greatly affected.

It should be understood that, in this application, the measurement gap may have other names, for example, measurement period and measurement interval. In this application, the measurement gap is used as an example for description, and should not be construed as a limitation on this application.

However, when bandwidth of a receiver of the terminal device is insufficient to cover both a frequency at which a serving cell is located and a frequency at which a to-be-measured neighboring cell is located, the terminal device needs to switch a receive bandwidth to the frequency of the neighboring cell for inter-frequency measurement.

Currently, in an inter-frequency or inter-system scenario, the terminal device usually needs assistance of the MG to perform effective measurement on a reference signal. Inter-frequency or inter-system measurement: If the terminal device does not have a plurality of receivers, or bandwidth of the receiver of the terminal device does not cover a to-be-measured inter-frequency frequency, signal receiving and sending of the serving cell and measurement of the neighboring cell cannot be simultaneously performed. In this case, the serving cell needs to arrange some MGs for the terminal device to perform inter-frequency and inter-system measurement. The measurement gap is a time period during which the terminal device leaves a current frequency to perform measurement on another frequency, and is related, for example, in inter-frequency measurement and inter-system measurement. During the MG, the network device does not schedule uplink transmission and downlink transmission, and the terminal device does not receive or send data.

Specifically, an activation periodicity of the MG may be obtained by using Formula (a): $\begin{matrix}SFN mod T = FLOOR \left(gapOffset/10\right) ; \\ Subframe = gapOffset mod 10 ; \\ T = MGRP / 10 .\end{matrix}$ Formula (a)

SFN represents a system frame number (system frame number), namely, an SFN in which a start moment of the MG is located. mod indicates a modulo operator. FLOOR indicates rounding down to the nearest integer. Subframe represents a subframe number, namely, a subframe number corresponding to a subframe in which the start moment of the MG is located. gapOffset is an offset of the start moment of the MG, and is usually obtained through configuration via higher layer signaling, for example, RRC signaling.

In this way, the terminal device can determine, based on Formula (a) and configuration parameters (for example, gapOffset and MGRP) provided by the network device, a subframe in which a start moment of one MG is located and an SFN in which the subframe is located.

In addition, if the terminal device is further configured with a parameter mgta, the parameter mgta indicates an advance of the start moment of the MG relative to a start moment obtained by using the foregoing formula, the actual start moment of the MG is further offset forward by mgta time units or advanced by mgta time units according to Formula (a), which is generally in milliseconds.

Because the receive bandwidth of the terminal device is switched, the terminal device cannot perform data receiving or sending with the network device of the camped cell during bandwidth switching. Based on this, the MG concept is introduced. As described above, the periodicity of the MG is configured via the higher layer signaling MGRP, and the duration of the MG is configured via the higher layer signaling MGL. During the MG, the terminal device may perform at least one of the following operations: First, switch the bandwidth. Second, measure a reference signal of the neighboring cell, for example, an SSB.

### 6. SSB-based measurement timing configuration (SS/PBCH measurement timing configuration, SMTC)

To measure the SSB of the neighboring cell, the network device further needs to configure some other parameters. For example, the network device configures, by configuring measurement objects (Measurement objects), objects for measurement performed by the terminal device, including an SSB frequency, an SSB subcarrier spacing, an SMTC, a trustlist cell, a blocklist cell, and the like. The SMTC represents a time sequence configuration delivered by the network device to the terminal device when the terminal device performs SSB-based measurement on a cell, for example, including an SMTC periodicity, SMTC duration, and an SMTC offset. The configuration of the SMTC actually indicates an available measurement window to the terminal device, to ensure that the terminal device can find, in the available measurement window, an SSB sent by each cell on a frequency.

The protocol specifies that the configuration of the SMTC includes an SMTC1 configuration and an SMTC2 configuration, to support differentiated configuration of SSB measurement for the neighboring cell. The SMTC2 configuration is optional.

The SMTC1 configuration may be understood as that a configuration information element corresponding to the SMTC1 is an SSB-MTC, and includes two sub-information elements: periodicityAndOffset and duration.
periodicityAndOffset indicates the SMTC periodicity (representing a repetition periodicity of a measurement action) and the SMTC offset (representing a start subframe of the measurement action in the periodicity).
duration indicates the SMTC duration (representing duration for which the measurement action should last after the measurement action is initiated).

SMTC2 configuration (optional): A configuration information element corresponding to the SMTC2 is an SSB-MTC2, used to flexibly configure differentiated SSB measurement parameters for a specified neighboring cell.

It should be noted that the SMTC2 is an optional configuration. If the SMTC2 is not configured, it indicates all neighboring cells use an SSB measurement parameter of the SMTC1. If the SMTC2 is configured, a periodicity (periodicity) of the SMTC2 needs to be smaller than periodicityAndOffset of the SMTC1.

For the SMTC, the terminal device determines a moment of the 1^{st} SMTC based on a periodicity and an offset parameter (periodicityAndOffset). A parameter configuration is usually in the SMTC1 configuration, and provides a periodicity (Periodicity) and an offset parameter (Offset) of the SMTC. The 1^{st} subframe of each SMTC may be determined according to Formula (b): $\begin{matrix}SFN mod T = \left(FLOOR\left(Offset/10\right)\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (b)

SFN represents a system frame number (system frame number), namely, an SFN in which a start moment of the SMTC is located. mod indicates a modulo operator. FLOOR indicates rounding down to the nearest integer. Periodicity indicates the periodicity of the SMTC. sf5 indicates five subframes. subframe represents a subframe, namely, a subframe in which the start moment of the SMTC is located. Offset is an offset of the start moment of the SMTC. CEIL indicates rounding up to the nearest integer.

In addition, measurement may be performed without configuring the MG. In this case, the network device needs to configure the SMTC for the terminal device, but does not need to configure the MG.

### 7. RSSI-based measurement timing configuration (RSSI measurement timing configuration, RMTC)

To measure an RSSI of a cell, the network device further needs to configure some other parameters. For example, the network device configures, by configuring measurement objects (Measurement objects), objects for measurement performed by the terminal device, including bandwidth of the RSSI, a center frequency of the bandwidth of the RSSI, an RMTC, and the like. The RMTC represents a time sequence configuration delivered by the network device to the terminal device when the terminal device performs RSSI-based measurement on a cell, for example, including an RMTC periodicity, RMTC duration, and an RMTC offset. The configuration of the RMTC actually indicates an available RSSI measurement window to the terminal device.

Generally, duration of the RMTC is determined by using a quantity of consecutive symbols for RSSI sampling reported by a physical layer (for example, determined by using measDurationSymbols in an RRC message) and a reference subcarrier spacing and a cyclic prefix used for RSSI measurement (for example, determined by using ref-SCS-CP in the RRC message).

For the RMTC, the terminal device determines a moment of the 1^{st} RMTC based on an RMTC measurement periodicity (rmtc-Periodicity) and an RMTC offset (rmtc-SubframeOffset). A parameter configuration is usually provided in the configuration of the RMTC. The 1^{st} subframe of each RMTC may be determined according to Formula (c): $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (c)

SFN represents a system frame number (system frame number), namely, an SFN in which a start moment of the RMTC is located. mod indicates a modulo operator. FLOOR indicates rounding down to the nearest integer. rmtc-Periodicity indicates the periodicity of the RMTC. subframe represents a subframe, namely, a subframe in which the start moment of the RMTC is located. rmtc-SubframeOffset is an offset of the start moment of the RMTC.

In addition, measurement may be performed without configuring the MG. In this case, the network device needs to configure the RMTC for the terminal device, but does not need to configure the MG.

Generally, the duration of the MG, namely, the MGL, is greater than or equal to duration of a measurement window, to ensure that the terminal device can monitor all reference signals in the window completely. For example, only when the MGL is greater than or equal to the duration of the SMTC, it can be ensured that the terminal device can detect all SSBs in the SMTC. In some embodiments, to minimize overheads of the MG, the configuration of the MG is generally determined by considering a capability of the terminal device and the configuration of the SMTC or the RMTC.

In conclusion, in a specific time period, for example, the duration of the MG or the duration of the SMTC, the terminal device needs to perform reference signal measurement but cannot perform data transmission. This may cause an increase in transmission delay of service data, affect service transmission performance, and especially affect a delay-sensitive service like an XR pro service obviously. A specific example is as follows:

In a possible example, when the terminal device needs to send and/or receive data during the MG (or the duration of the SMTC), the terminal device cannot normally receive or send the data. Consequently, transmission performance of a delay-sensitive service, for example, an XR pro service, is affected.

FIG. 5 is used as an example. As shown in a dashed box in FIG. 5, the terminal device cannot send service data within the duration of the MG.

In another possible example, after the terminal device sends a DSR, or sends a BSR, or sends an SR (for example, an SR triggered by a DSR, or an SR triggered by a BSR), if an MG or an SMTC occurs, resource scheduling cannot be normally performed, data receiving and sending are affected, and transmission delay of a delay-sensitive service is increased.

For example, when a DSR triggers an SR, and after the terminal device reports the SR, an MG appears in a subsequent period of time, the terminal device cannot send the DSR in a timely manner, and cannot receive a scheduled resource. Consequently, normal transmission of data is affected, and transmission delay is increased.

Similarly, when a BSR triggers an SR, and after the terminal device reports the SR, an MG appears in a subsequent period of time, the terminal device cannot send the BSR in a timely manner, and cannot receive a scheduled resource. Consequently, normal transmission of data is affected, and transmission delay is increased.

For another example, when a DSR is triggered, and after the terminal device reports the DSR, an MG appears in a subsequent period of time, the terminal device cannot receive a scheduled resource in a timely manner. Consequently, normal transmission of data is affected, and transmission delay is increased.

Similarly, when a BSR is triggered, and after the terminal device reports the BSR, an MG appears in a subsequent period of time, the terminal device cannot receive a scheduled resource in a timely manner. Consequently, normal transmission of data is affected, and transmission delay is increased.

In view of this, this application provides a communication method. The method may be applied to the system shown in FIG. 1. The method includes: A terminal device sends first information at a first moment, where the first information indicates first data, and the first data is to-be-transmitted data. When a first time period overlaps a first measurement time period, the terminal device monitors second information on a physical downlink control channel (physical downlink control channel, PDCCH) monitoring occasion in a second time period, where the second information indicates a first uplink resource, a start moment of the first time period is equal to or later than the first moment, and the second time period includes at least one of the following: a first overlapping time period or the first measurement time period. The first overlapping time period is a time period in which the first time period overlaps the first measurement time period. The first measurement time period is determined based on a first configuration, and the first configuration is a configuration for sending a first reference signal by a candidate cell.

In other words, after the terminal device sends the first information at the first moment, even if the first time period overlaps the first measurement time period, the terminal device still performs a normal operation in the second time period, for example, monitors the second information on the PDCCH monitoring occasion in the second time period, to learn of the first uplink resource in a timely manner, and perform transmission of the first data by using the first uplink resource.

The second time period includes the first overlapping time period, namely, the time period in which the first time period overlaps the first measurement time period. Alternatively, the second time period includes the first measurement time period. In comparison with a case in which the terminal device measures the first reference signal in the first measurement time period and monitors the second information after the first measurement time period, in this application, the terminal device monitors the second information instead of measuring the reference signal on the PDCCH monitoring occasion in the second time period. In this way, impact of reference signal measurement on data transmission is reduced. This helps reduce service data transmission delay and improve service transmission performance.

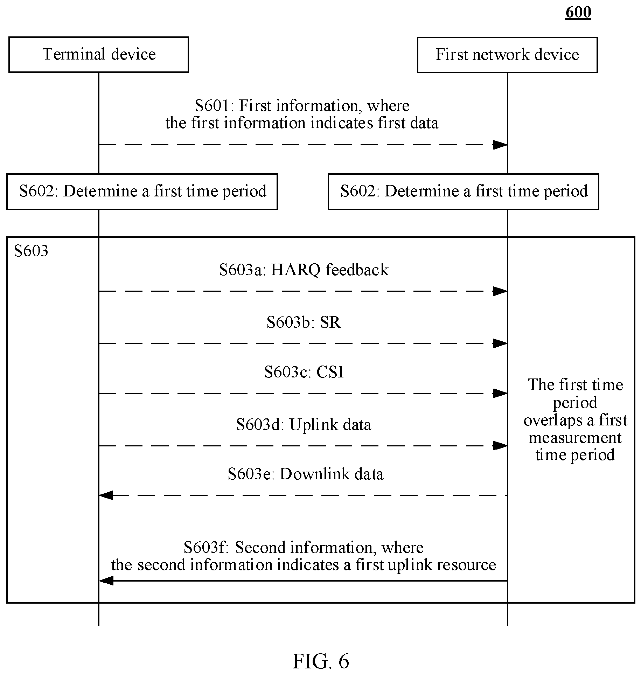

The following describes in detail the communication method provided in embodiments of this application with reference to FIG. 6. A communication method 600 provided in an embodiment of this application includes the following operations.

(Optional) S601: A terminal device sends first information at a first moment.

For example, the terminal device sends the first information to a first network device at the first moment. Correspondingly, the first network device receives the first information from the terminal device at the first moment. The first information indicates first data.

It should be understood that in a cell handover scenario, the first network device may be a source network device, for example, a source base station.

The first data is described as follows:
The first data is to-be-transmitted data. For the to-be-transmitted data, refer to descriptions in the term explanation part. Details are not described again.

In a possible implementation, the first data includes all to-be-transmitted data corresponding to a first LCG. The first LCG is one or more of at least one LCG.

For example, the at least one LCG may include an LCG₀ to an LCG₇. The first LCG may include one of the LCGs: the LCG₀, and the first data is all to-be-transmitted data corresponding to the LCG₀. Alternatively, the first LCG may include the LCG₀ to the LCG₂, and the first data is all to-be-transmitted data corresponding to each of the LCG₀ to the LCG₂.

Optionally, all the to-be-transmitted data corresponding to the first LCG may also include to-be-transmitted data in another entity corresponding to a radio bearer (radio bearer, RB) corresponding to the first LCG, for example, data that is not stored in a buffer corresponding to the LCG. For example, each LCH included in one LCG corresponds to one RB, and each RB corresponds to an RLC entity and a PDCP entity. Therefore, all the to-be-transmitted data corresponding to the first LCG may be data in a buffer of each of LCHs in the first LCG, or may include data in buffers of RLC entities and/or PDCP entities respectively corresponding to these LCHs.

In another possible implementation, the first data includes data whose remaining delay budget is less than a first delay threshold in a first LCG. The first LCG is one or more of at least one LCG, and the first delay threshold is a parameter configured by using second configuration information.

For example, the at least one LCG may include an LCG₀ to an LCG₇. The first LCG may include the LCG₀, the first delay threshold is 20 ms, and the first data is to-be-transmitted data whose remaining delay budget is less than 20 ms in the LCG₀. In addition, when the first LCG includes more than one LCH, the first data is to-be-transmitted data whose remaining delay budget is less than 20 ms in all LCHs included in the first LCG. Optionally, all to-be-transmitted data corresponding to the first LCG may also include to-be-transmitted data in another entity corresponding to a radio bearer RB corresponding to the first LCG, for example, to-be-transmitted data whose remaining delay budget is less than 20 ms in an RLC entity and/or a PDCP entity corresponding to each LCH in the first LCG.

In still another possible implementation, the first data includes to-be-transmitted data corresponding to a second LCG, for example, all to-be-transmitted data corresponding to the second LCG, or data whose remaining delay budget is less than a specific delay threshold (for example, a first delay threshold) in the second LCG. The second LCG includes a first LCH, and a priority of the first LCH is higher than a priority of a first measurement time period (for example, an MG). In addition, the second LCG may alternatively be replaced with an RB corresponding to the second LCG.

Optionally, the first information indicates at least one of the following items:
A first item is a first data amount. The first data amount is a data amount of the first data. For example, the first information includes information carried in a buffer size field, so that the data amount of the first data is indicated by the buffer size field.

A second item is first delay information. The first delay information is delay information of second data, and the second data is data with a shortest remaining delay budget in the first data. For example, the first information includes information carried in a remaining time field, so that the first delay information is indicated by the remaining time field.

A third item is a first parameter. The first parameter indicates a first buffer status list, the first buffer status list includes at least one index, and one of the at least one index indicates a data amount of the first data. For example, the first information includes information carried in a BT field, so that the first buffer status list is indicated by the BT field. In this way, when the first information indicates the data amount of the first data, the first information may include one index in the first buffer status list, so that the data amount of the first data is indicated by the index.

Optionally, the first information indicates that the terminal device has to-be-transmitted data, or is used to request an uplink resource.

Optionally, the first information may include the following implementations.

Implementation 1: The first information includes an SR, and the SR is used to request the uplink resource.

Implementation 2: The first information includes a DSR. That the first information indicates the first data may be understood as that the DSR indicates delay of the first data. For details, refer to descriptions of FIG. 4. Details are not described again.

Implementation 3: The first information includes a BSR. That the first information indicates the first data may be understood as that the BSR indicates the data amount of the first data. For details, refer to descriptions of FIG. 2 or FIG. 3. Details are not described again.

For the terminal device, the terminal device performs S602.

S602: The terminal device determines a first time period.

Similarly, the first network device determines the first time period.

Optionally, the first time period is preconfigured, for example, configured before delivery from the factory.

Optionally, the first time period is configured on a network device (for example, the first network device) side, for example, configured via higher layer signaling.

Optionally, the first time period is determined based on the first information.

For example, the first time period is determined based on delay information of the first data. For example, the first information is a DSR MAC CE. Delay information of a maximum of eight LCGs may be reported in one DSR MAC CE. Therefore, the first time period may be determined by using the delay information reported in the DSR MAC CE, for example, determined by using information about shortest delay, information about longest delay, or an average value of delay information reported in the DSR MAC CE.

For example, the terminal device reports the DSR MAC CE at the first moment, and the DSR MAC CE includes information about three LCGs, for example, the LCG0, the LCG2, and the LCG5. Delay information corresponding to the LCG0 is 10 ms, delay information corresponding to the LCG2 is 15 ms, and delay information corresponding to the LCG5 is 13 ms.

When the first time period is determined based on the information about the shortest delay in the DSR MAC CE, the first time period is 10 ms.

When the first time period is determined based on the information about the longest delay in the DSR MAC CE, the first time period is 15 ms.

When the first time period is determined based on the average value of the delay information in the DSR MAC CE, the first time period is the average value of the delay information, namely, (10 + 15 + 13)/3 ms, or a value obtained by rounding up the average value of the delay information to the nearest integer, or a value obtained by rounding down the average value of the delay information to the nearest integer, or a value obtained by rounding off the average value of the delay information.

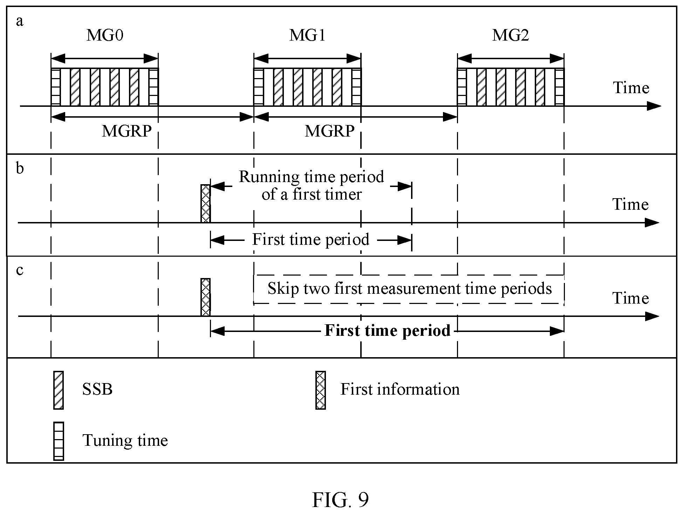

For another example, the first time period is determined by using a first timer. The first timer is a timer started in response to the sending of the first information. For example, the terminal device further performs the following operation: In response to the sending of the first information, the terminal device further starts the first timer. A start moment of the first timer is a start moment of the first time period, and a running time period of the first timer is the first time period, as shown in a block identified by a letter b in FIG. 9.

Further, the running time period of the first timer may be determined in the following manners.

Manner 1: The running time period of the first timer may be preconfigured, for example, configured before delivery from the factory.

Manner 2: The running time period of the first timer may be configured on a network device (for example, the first network device) side, for example, configured via higher layer signaling.

Manner 3: The running time period of the first timer may be determined based on delay information of the first data, for example, determined based on information about shortest delay, information about longest delay, or an average value of delay information.

For still another example, the first time period is greater than or equal to a sum of N first measurement time periods, where N is a positive integer. In this case, it may be understood as that the terminal device does not measure a first reference signal in the N first measurement time periods (for example, N MGs) after sending the first information, as shown in a block identified by a letter c in FIG. 9. In FIG. 9, N = 2. In other words, the N first measurement time periods after the terminal device sends the first information are not activated. Preferably, the N first measurement time periods may be N consecutive first measurement time periods. For example, the first time period may be equal to the sum of the N first measurement time periods. Alternatively, when the first time period is greater than the sum of the N first measurement time periods, an end moment of the first time period may be understood as an end moment of the N^{th} first measurement time period in the N first measurement time periods. N may be preconfigured, or may be semi-statically configured. This is not limited in this application. For the first measurement time period, refer to descriptions of S603. Details are not described herein.

It should be supplemented that, in a possible implementation, a PDCCH monitoring function is assigned to the first time period, in other words, the first time period is used for PDCCH monitoring. It may be understood as that the first network device may send DCI through a PDCCH in the first time period, or the terminal device continuously performs PDCCH monitoring in the first time period.

For the terminal device, after determining the first time period, the terminal device performs S603.

S603: When the first time period overlaps the first measurement time period, the terminal device performs transmission in a second time period.

That the terminal device performs transmission in the second time period may be understood as that S603 includes one or more of the following:
(Optional) S603a: When the first time period overlaps the first measurement time period, the terminal device sends a hybrid automatic repeat request (hybrid automatic repeat request, HARQ) feedback to the first network device in the second time period. Correspondingly, the first network device receives the HARQ feedback from the terminal device in the second time period. The HARQ feedback is determined based on a decoding result of downlink data.

(Optional) S603b: When the first time period overlaps the first measurement time period, the terminal device sends an SR to the first network device in the second time period. Correspondingly, the first network device receives the SR from the terminal device in the second time period.

(Optional) S603c: When the first time period overlaps the first measurement time period, the terminal device sends channel state information (channel state information, CSI) to the first network device in the second time period. Correspondingly, the first network device receives the CSI from the terminal device in the second time period.

(Optional) S603d: When the first time period overlaps the first measurement time period, the terminal device sends uplink data to the first network device in the second time period. Correspondingly, the first network device receives the uplink data from the terminal device in the second time period.

For example, the terminal device sends the uplink data through an uplink shared channel (uplink shared channel, UL-SCH).

For another example, the terminal device sends the uplink data by using a semi-static resource.

It may be understood that, based on S603a to S603d, it can be learned that the terminal device may perform uplink transmission in the second time period. This helps reduce uplink transmission delay. The uplink transmission may occupy all of the second time period, or may occupy a part of the second time period. This is not limited in this application.

It may be understood that, based on S603a to S603c, it can be learned that the terminal device may send uplink control information in the second time period. The uplink control information may include the HARQ feedback, the SR, or the CSI.

(Optional) S603e: When the first time period overlaps the first measurement time period, the first network device sends downlink data to the terminal device in the second time period. Correspondingly, the terminal device receives the downlink data from the first network device in the second time period.

For example, the terminal device receives the downlink data through a downlink shared channel (downlink shared channel, DL-SCH).

Transmission of the downlink data may occupy all of the second time period, or may occupy a part of the second time period. This is not limited in this application.

S603f: When the first time period overlaps the first measurement time period, the first network device sends second information to the terminal device on a PDCCH monitoring occasion in the second time period. Correspondingly, the terminal device monitors the second information from the first network device on the PDCCH monitoring occasion in the second time period.

The second information indicates a first uplink resource. The first uplink resource may be used by the terminal device to send the first data.

Optionally, the second information may alternatively indicate the transmission of the downlink data. The terminal device receives the downlink data based on the second information.

For example, the second information may be DCI. For the first time period, refer to descriptions of S602. Details are not described again.

The first measurement time period is described as follows:
The first measurement time period is determined based on a first configuration. The first configuration is a configuration for sending a first reference signal by a candidate cell.

For example, the terminal device receives first configuration information from the first network device. The first configuration information indicates the first configuration. The terminal device determines the first measurement time period based on the first configuration. The first configuration may indicate at least one of the following: a periodicity of sending the first reference signal by the candidate cell, duration of sending the first reference signal by the candidate cell, and the like.

Optionally, the first configuration is a measurement timing configuration, for example, an SMTC (or an RMTC or the like). The first configuration indicates an SMTC periodicity, SMTC duration, an SMTC offset, and the like. For details, refer to descriptions in the term explanation part. The first measurement time period is duration of the SMTC. For example, the first measurement time period may be one SMTC.

Optionally, the first configuration is a channel state information reference signal (channel state information reference signal, CSI-RS) configuration, and the CSI-RS configuration indicates a sending periodicity and duration of a CSI-RS. For details, refer to technical specifications related to 3GPP. The first measurement time period is a time period in which the CSI-RS is sent. For example, the first measurement time period may be a time period in which the CSI-RS is continuously sent within one sending periodicity.

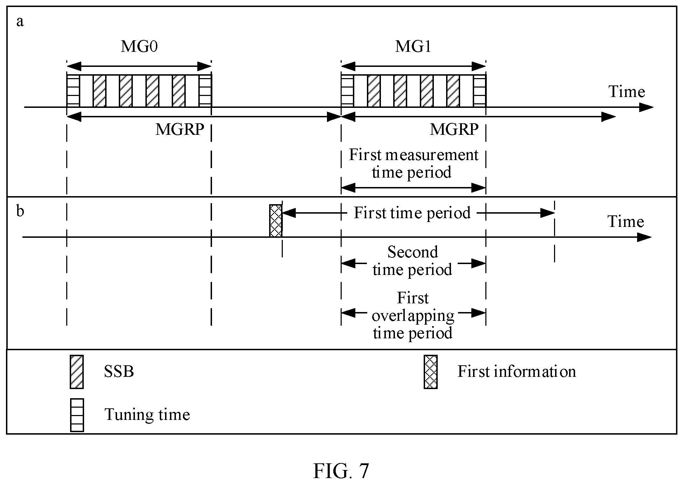

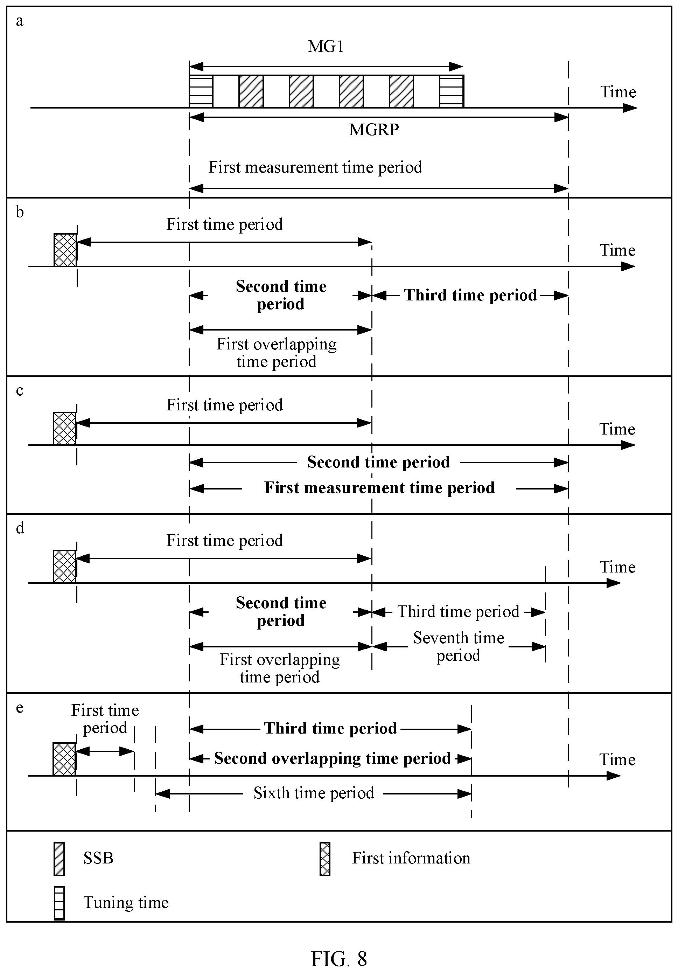

In addition, in a possible alternative manner, the first measurement time period may alternatively be determined based on an MG configuration. The MG configuration indicates an MGRP, an MGL, an offset, and the like. The first measurement time period is a time period corresponding to the MG. For example, the first measurement time period may be one MG. As shown in FIG. 7 or FIG. 8, the first measurement time period is an MG1.

The second time period is described as follows:
The second time period includes at least one of the following: a first overlapping time period or the first measurement time period.

The first overlapping time period is a time period in which the first time period overlaps the first measurement time period.

FIG. 7 is used as an example. As shown in a block identified by a letter b in FIG. 7, the first time period includes all of the first measurement time period. In this case, the first overlapping time period is the same as the first measurement time period.

FIG. 8 is used as an example. As shown in a block identified by a letter b in FIG. 8, the first time period includes a part of the first measurement time period. In this case, the second time period is the first overlapping time period, and the first overlapping time period is a part of the first measurement time period, namely, the time period in which the first measurement time period overlaps the first time period.

FIG. 8 is used as an example. As shown in a block identified by a letter c in FIG. 8, the first time period includes a part of the first measurement time period. In this case, the second time period may be the first measurement time period.

Optionally, when the second time period includes the first overlapping time period, the PDCCH monitoring occasion in the second time period includes a time period in which the first overlapping time period overlaps a first monitoring time period. The first monitoring time period is determined based on a second configuration, and the second configuration is used to determine a PDCCH monitoring time period. In this application, the first monitoring time period may be a time period after the first moment. For example, after sending the first information at the first moment, the terminal device continuously performs PDCCH monitoring in the first monitoring time period.

In a possible implementation, the second configuration is a discontinuous reception (discontinuous reception, DRX) configuration. Active time (active time) in the DRX configuration includes running time of at least one of the following timers.

A first one is a DRX inactivity timer drx-inactivityTimer. This timer is started after any DCI for scheduling initial transmission is received during the active time.

A second one is a DRX on duration timer drx-onDurationTimer. This timer is started based on a DRX periodicity.

A third one is a DRX uplink retransmission timer drx-RetransmissionTimerUL. After the terminal device sends the uplink data, for example, a MAC PDU, the terminal device starts an uplink hybrid automatic repeat request round trip time timer drx-HARQ-RTT-TimerUL, and starts the drx-RetransmissionTimerUL on a next adjacent symbol after the drx-HARQ-RTT-TimerUL expires. During running of the drx-RetransmissionTimerUL, the terminal device monitors uplink retransmission information.

A fourth one is a DRX downlink retransmission timer drx-RetransmissionTimerDL. After the terminal device feeds back a HARQ-ACK, the terminal device starts a downlink hybrid automatic repeat request round trip time timer drx-HARQ-RTT-TimerDL, and if there is a NACK indicating a PDSCH decoding failure in a HARQ-ACK codebook, starts the drx-RetransmissionTimerDL on a next adjacent symbol after the drx-HARQ-RTT-TimerDL expires. During running of the drx-RetransmissionTimerDL, the terminal device monitors downlink retransmission information.

In the DRX configuration, the first monitoring time period may be an active time period in DRX. The terminal device continuously performs PDCCH monitoring during the active time (active time).

In another possible implementation, the second configuration is used to configure a search space (search space). For example, the terminal device determines, based on the configured search space, the PDCCH monitoring occasion. Alternatively, the second configuration is used to configure a search space set (search space set). For example, when DRX is not configured for the terminal device, the terminal device determines, based on the configured search space set, the PDCCH monitoring occasion.

It should be supplemented that, in this application, the PDCCH monitoring occasion may alternatively be described as an opportunity available for monitoring a PDCCH or an occasion available for monitoring a PDCCH. In this application, the PDCCH monitoring occasion is used as an example for description, and should not be construed as a limitation on this application.

It should be supplemented that, in this application, the start moment of the first time period may be equal to or later than the first moment. When the start moment of the first time period is later than the first moment, there is a specific time period, for example, a fifth time period, between the start moment of the first time period and the first moment. The fifth time period may be preconfigured, for example, configured before delivery from the factory. The fifth time period may alternatively be configured by a network device (for example, the first network device). The fifth time period may be equal to zero, or may be greater than zero. This is not limited in this application.

It should be understood that, in a possible alternative description, the terminal device sends the first information in a first time unit. A start time unit of the first time period and the first time unit may be a same time unit. Alternatively, a start time unit of the first time period may be a next time unit of the first time unit, as shown in FIG. 7 or FIG. 8. Alternatively, a start time unit of the first time period is later than the first time unit, and there are L time units between the start time unit of the first time period and the first time unit, where L is a positive integer.

In this application, one time unit may include one or more symbols, one or more slots, one or more subframes, or the like. For the symbol, the slot, or the subframe, refer to technical specifications related to 3GPP. Details are not described again.

Further, S603f includes: When the first time period overlaps the first measurement time period, and a first priority is higher than a second priority, the first network device sends the second information to the terminal device on the PDCCH monitoring occasion in the second time period. Correspondingly, the terminal device monitors the second information from the first network device on the PDCCH monitoring occasion in the second time period.

The first priority is a priority of the first time period, and the priority of the first time period is determined according to a priority of the first information.

For example, when the first information indicates data of the second LCG, the second LCG includes the first LCH. The first priority may be a priority of the second LCG, or may be the priority of the first LCH.

For another example, the first information is an SR, and a priority of the SR may include two levels: high or low.

In a possible case, the priority of the SR may reuse a physical layer priority of an existing SR. For example, the priority of the SR is determined by using phy-priorityIndex.

The second priority is the priority of the first measurement time period, and the second priority is determined based on the first configuration. For example, the first configuration indicates the priority of the first measurement time period. An example in which the second priority is a priority of the MG is used. The priority of the MG may include two levels: high or low. Alternatively, the priority of the MG may include a plurality of levels. For example, the priority of the MG includes 16 levels, for example, an MG priority 1, an MG priority 2, an MG priority 3, ..., an MG priority 15, and an MG priority 16. According to an ascending order, the 16 priorities may be from high to low (for example, the MG priority 1 is the highest among the 16 priorities) or from low to high (for example, the MG priority 16 is the highest among the 16 priorities).

Optionally, the priority of the SR and the priority of the MG are used as an example.

In a possible case, if the priority of the SR is high, it means that the priority of the SR is higher than any one of all (for example, 16) MG priorities.

If the priority of the SR is low, it means that the priority of the SR is lower than any one of all (for example, 16) MG priorities.

For example, the first priority may exist in a form of a switch. For example, when the first priority is configured, it indicates that the first priority is high, or when the first priority is not configured, it indicates that the first priority is low.

In another possible case, if the priority of the SR is high, it means that the priority of the SR is higher than any one of M MG priorities, or higher than any one of M - 1 MG priorities. If the priority of the SR is low, it means that the priority of the SR is lower than any one of M MG priorities, or lower than any one of M - 1 MG priorities.

Any one of the M MG priorities is lower than or equal to a first threshold.

For example, the first threshold is the MG priority 8 (or 9). In an example, among the 16 MG priorities, eight priorities are lower than the first threshold, namely, the MG priority 9, the MG priority 10, ..., and the MG priority 16, and eight priorities are higher than the first threshold, namely, the MG priority 1, the MG priority 2, ..., and the MG priority 8. In this case, the priority of the SR is higher than the MG priority 9 to the MG priority 16, and the priority of the SR is lower than the MG priority 1 to the MG priority 8.

Alternatively, on the contrary, among the 16 MG priorities, eight priorities are lower than the first threshold, namely, the MG priority 1, the MG priority 2, ..., and the MG priority 8, and eight priorities are higher than the first threshold, namely, the MG priority 9, the MG priority 10, ..., and the MG priority 16. In this case, the priority of the SR is higher than the MG priority 1 to the MG priority 8, and the priority of the SR is lower than the MG priority 9 to the MG priority 16.

For example, the priority of the MG may reuse gapPriority-r17 signaling in GapConfig in an RRC message. The first threshold may be semi-statically indicated by a base station via higher layer signaling (for example, via an RRC message), may be preconfigured before delivery from the factory, or may be dynamically indicated.

In this case, in a possible case, after the first threshold is configured, the first priority may not be explicitly configured, in other words, the first priority may be determined by using the first threshold. Alternatively, in a case, the first threshold may be understood as the first priority.

Further, S603f includes: When the first time period overlaps the first measurement time period, the terminal device monitors the second information from the first network device on the PDCCH monitoring occasion in the second time period based on first indication information.

The first indication information indicates to perform PDCCH monitoring in the second time period.

For example, the first indication information may be carried in higher layer signaling, for example, RRC signaling. This is not limited in this application.

In this way, the terminal device determines, based on the first indication information, that the terminal device can normally monitor the second information in a specific time period (for example, the second time period) after the first information is sent. This helps reduce data transmission delay.

It is easy to understand that, when the first time period is not assigned the PDCCH monitoring function, if the first time period overlaps the first measurement time period, but an overlapping time period does not include a PDCCH monitoring occasion, it means that the terminal device does not monitor the second information in the overlapping time period. In this case, the terminal device may measure the first reference signal in the second time period, so that the terminal device measures the first reference signal of the candidate cell in a timely manner, to improve accuracy of reference signal measurement.

It should be noted that S603a to S603d are optional steps. The terminal device may perform one or more of S603a to S603d, to improve uplink transmission performance. Alternatively, the terminal device may not perform any one of S603a to S603d. In other words, when the first time period overlaps the first measurement time period, the terminal device only monitors the second information in the second time period (namely, performs S603f), but does not perform uplink transmission, to reduce a possibility of "data loss" to some extent.

A "data loss" problem is described as follows:
For example, the first information is a DSR MAC CE. Transmission of the DSR MAC CE is performed by using a MAC PDU, and transmission of the MAC PDU is usually performed through a physical uplink shared channel (physical uplink shared channel, PUSCH). Therefore, there is a specific probability that the transmission fails. Consequently, the following cases may occur.

After the terminal device sends the DSR MAC CE, the terminal device may perform transmission in the subsequent first measurement time period (for example, the MG). However, an error occurs when the first network device decodes the PUSCH, and the first network device does not realize that the terminal device sends the DSR MAC CE. Consequently, the first network device does not consider that the terminal device can perform transmission. In this case, if the terminal device has uplink data to be sent and an uplink resource exists, the terminal device may send the uplink data on the uplink resource. However, the first network device does not know that the terminal device can perform transmission, and may have allocated the uplink resource to another terminal device. Consequently, the data loss problem is caused, interference is generated, and the like.

Alternatively, the terminal device has to-be-reported uplink control information (for example, the HARQ feedback, the SR, or the CSI) in the first measurement time period. After sending the DSR MAC CE, the terminal device considers that the terminal device can perform transmission, and therefore normally sends the uplink control information. However, because the first network device fails to decode the PUSCH carrying the DSR MAC CE, the first network device does not know that the terminal device can normally send the uplink control information, and may not receive the uplink control information in a timely manner. Consequently, the data loss problem is caused.

Therefore, to avoid a case of "data loss", the terminal device may not perform any one of S603a to S603d. In other words, it may be understood as follows: It is stipulated that, after the terminal device sends the first information at the first moment, when the first time period overlaps the first measurement time period, the terminal device normally monitors the second information in the second time period (namely, performs S603f), but does not perform uplink transmission (namely, does not perform any one of S603a to S603d), to reduce the possibility of "data loss" to some extent. For example, the SR is used as an example. Even if a time period corresponding to an SR resource in time domain is in the second time period, the terminal device does not send the SR.

It should be supplemented that, in a parallel manner, S603 may be replaced with the following: When the end moment of the first time period is earlier than a start moment of the first measurement time period, and an interval between the end moment of the first time period and the start moment of the first measurement time period is less than a second threshold, the terminal device monitors the second information on a PDCCH monitoring occasion in the first measurement time period.

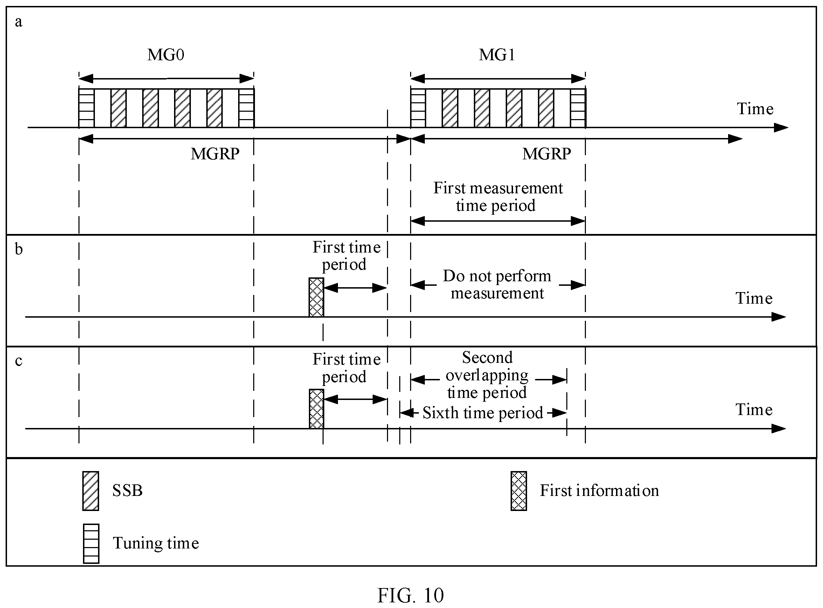

For example, when the end moment of the first time period is earlier than the start moment of the first measurement time period, and the interval between the end moment of the first time period and the start moment of the first measurement time period is less than the second threshold, the terminal device does not perform measurement in the first measurement time period, but monitors the second information, as shown in a block identified by a letter b in FIG. 10.

Because a capability of the terminal device is limited, when the interval between the end moment of the first time period and the start moment of the first measurement time period is less than the second threshold, the terminal device cannot perform frequency switching in a timely manner, for example, switch from a frequency of a current cell to a frequency of the candidate cell, and consequently cannot measure the first reference signal of the candidate cell. Therefore, the terminal device may monitor the second information on the PDCCH monitoring occasion in the first measurement time period. The second threshold may be preconfigured or semi-statically configured. The PDCCH monitoring occasion in the first measurement time period may be determined based on semi-static configuration information (for example, an RRC message), for example, the DRX configuration or the search space set. Details are not described herein again.

It should be supplemented that, in a parallel manner, the second time period may alternatively be a second overlapping time period.

For example, S603 may be replaced with the following: When the end moment of the first time period is earlier than a start moment of the first measurement time period, and an interval between the end moment of the first time period and the start moment of the first measurement time period is less than a second threshold, the terminal device may monitor the second information on a PDCCH monitoring occasion in the second overlapping time period. The second overlapping time period includes an overlapping time period between a sixth time period and the first measurement time period, as shown in a block identified by a letter c in FIG. 10. The sixth time period may be semi-statically configured. A start moment of the sixth time period is later than or equal to the end moment of the first time period.

For example, the start moment of the sixth time period is earlier than the start moment of the first measurement time period, as shown in the block identified by the letter c in FIG. 10.

For example, an end moment of the sixth time period is earlier than an end moment of the first measurement time period, as shown in the block identified by the letter c in FIG. 10.

In this way, the terminal device can determine the second overlapping time period based on the sixth time period and the first measurement time period, and then determine to monitor the second information in a part of the first measurement time period.

In a possible case, when the end moment of the first time period is earlier than the start moment of the first measurement time period, and the interval between the end moment of the first time period and the start moment of the first measurement time period is less than the second threshold, the second overlapping time period may alternatively be the first measurement time period.

The foregoing describes an operation performed by the terminal device in the second time period by using an example in which the first time period overlaps the first measurement time period.

The following describes a reference signal measurement process of the terminal device.

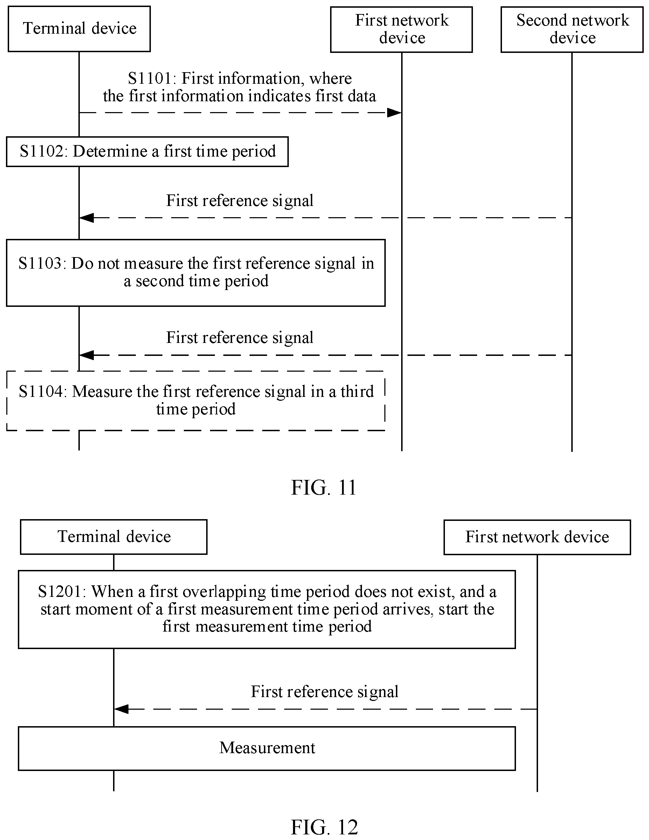

As shown in FIG. 11, a communication method according to an embodiment of this application further includes the following operations.

(Optional) S1101: A terminal device sends first information at a first moment.

For an implementation process of S1101, refer to descriptions of S601.

S1102: The terminal device determines a first time period.

For an implementation process of S1102, refer to descriptions of S602.

S1103: The terminal device does not measure a first reference signal in a second time period.

Optionally, in a possible alternative description, when the first time period overlaps a first measurement time period, the terminal device cancels measuring the first reference signal in the second time period.

A measurement result of the first reference signal indicates signal quality of a candidate cell. For example, the first reference signal is an SSB, and the measurement result of the first reference signal may include one or more of the following: RSRP, an RSSI, RSRQ, an SINR, or the like. For details, refer to descriptions in the term explanation part. Details are not described again.

It should be supplemented that, in this application, the first reference signal is a reference signal sent by the candidate cell. A network device corresponding to the candidate cell is denoted as a second network device. In this application, the candidate cell is different from a cell on which the terminal device currently camps. A first network device and the second network device may be the same, or may be different. This is not limited in this application.

The second time period includes at least one of the following: a first overlapping time period, the first measurement time period, or a second overlapping time period. For details, refer to descriptions of S603.

Specifically, when the first time period overlaps the first measurement time period, the second time period includes at least one of the following: the first overlapping time period or the first measurement time period. For example, when the first time period overlaps the first measurement time period, the terminal device does not measure the first reference signal in the first overlapping time period or the first measurement time period.

When the first time period does not overlap the first measurement time period, the second time period includes at least one of the following: the second overlapping time period or the first measurement time period. The second overlapping time period is an overlapping time period between a sixth time period and the first measurement time period. For example, when an end moment of the first time period is earlier than a start moment of the first measurement time period, and an interval between the end moment of the first time period and the start moment of the first measurement time period is less than a second threshold, the terminal device may not measure the first reference signal in the second overlapping time period or the first measurement time period.

It should be supplemented that, if the second time period includes the first overlapping time period, the terminal device does not measure the first reference signal in the first overlapping time period. It may be understood as that the first overlapping time period (namely, a part of the first measurement time period) is not activated.

It should be supplemented that, if the second time period includes the second overlapping time period, the terminal device does not measure the first reference signal in the second overlapping time period. It may be understood as that the second overlapping time period (namely, a part of the first measurement time period) is not activated.

It should be supplemented that, if the second time period includes the first measurement time period, the terminal device does not measure the first reference signal in the first measurement time period. It may be understood as that the first measurement time period (namely, all of the first measurement time period) is not activated. In other words, when the first time period overlaps the first measurement time period, the terminal device determines that the first measurement time period (namely, all of the first measurement time period) is not activated.

In a possible implementation, that the terminal device does not measure the first reference signal in the second time period may be understood as that a condition for measuring the first reference signal by the terminal device changes. For example, when a condition for starting (or activating) the first measurement time period described above is met, a new condition may be further considered. In an example, for the new condition, refer to whether the first measurement time period overlaps the first time period. For example, when the condition for starting the first measurement time period described above is met, and the first measurement time period does not overlap the first time period, the terminal device measures the first reference signal in the first measurement time period. Alternatively, on the contrary, it may be understood as that when the condition for starting the first measurement time period described above is met, and the first measurement time period overlaps the first time period, the terminal device does not measure the first reference signal in the first measurement time period.

For example, the first measurement time period is an MG, and the 1^{st} time unit (for example, a subframe) of each MG is a subframe that meets the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, if duration (for example, determined based on a parameter MGL) of the MG does not overlap the first time period, the first measurement time period may be started (or activated). For example, the first measurement time period may further be related to another parameter, for example, mgta. The parameter is also used to determine duration of the first measurement time period, to further determine activation time and the duration of the MG.

It should be noted that, for a related parameter of Formula (1), refer to descriptions of Formula (a). Details are not described again.

For another example, the first measurement time period is an SMTC, and the 1^{st} time unit (for example, a subframe) of each SMTC is a subframe that meets the following condition: $\begin{matrix}SFN mod T = \left(FLOOR\left(Offset/10\right)\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (2)

In addition, if duration (for example, determined based on a parameter duration) of the SMTC does not overlap the first time period, the first measurement time period may be started (or activated), in other words, the terminal device measures the first reference signal in the first measurement time period. Alternatively, on the contrary, it may be understood as that if duration (for example, determined based on a parameter duration) of the SMTC overlaps the first time period, the first measurement time period may not be started (or activated), in other words, the terminal device does not measure the first reference signal in the first measurement time period.

It should be noted that, for a related parameter of Formula (2), refer to descriptions of Formula (b). Details are not described again.

For still another example, the first measurement time period is an RMTC, and the 1^{st} time unit (for example, a subframe) of each RMTC is a subframe that meets the following condition: $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (3)

In addition, if duration of the RMTC does not overlap the first time period, for example, based on a quantity of consecutive symbols for RSSI sampling reported by a physical layer and a reference subcarrier spacing and a cyclic prefix used for RSSI measurement, the first measurement time period may be started (or activated), in other words, the terminal device measures the first reference signal in the first measurement time period. Alternatively, on the contrary, it may be understood as that if duration of the RMTC overlaps the first time period, the first measurement time period may not be started (or activated), in other words, the terminal device does not measure the first reference signal in the first measurement time period.

That the duration of the first measurement time period does not overlap the first time period may also be understood as that the 1^{st} time unit of the first measurement time period is not in the first time period.

In addition, considering the foregoing scenario in the parallel manner, when the end moment of the first time period is earlier than the start moment of the first measurement time period, and the interval between the end moment of the first time period and the start moment of the first measurement time period is less than the second threshold, the terminal device monitors second information on a PDCCH monitoring occasion in the first measurement time period.

In a case, when the end moment of the first time period is earlier than the start moment of the first measurement time period, and the interval between the end moment of the first time period and the start moment of the first measurement time period is less than the second threshold, the terminal device does not perform measurement in the first measurement time period, but monitors the second information, as shown in the block identified by the letter b in FIG. 10.

In this case, it may alternatively be understood that, when the end moment of the first time period is earlier than the start moment of the first measurement time period, and the interval between the end moment of the first time period and the start moment of the first measurement time period is greater than or equal to the second threshold, the terminal device performs measurement in the first measurement time period.

In this case, when the condition for starting the first measurement time period described above is met, a new condition may be further considered. In a case, for the new condition, refer to whether a time interval between the 1^{st} time unit (for example, a subframe) and the first time period is greater than the second threshold. For example, when the condition for starting the first measurement time period described above is met, and the time interval between the 1^{st} time unit (for example, a subframe) and the first time period is greater than or equal to the second threshold, the terminal device measures the first reference signal in the first measurement time period. Alternatively, on the contrary, it may be understood as that when the condition for starting the first measurement time period described above is met, and the time interval between the 1^{st} time unit (for example, a subframe) and the first time period is less than the second threshold, the terminal device does not measure the first reference signal in the first measurement time period.

For example, the first measurement time period is an MG, and the 1^{st} time unit (for example, a subframe) of each MG is a subframe that meets the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, if an interval between a start moment (for example, subframe in Formula (1)) of the MG and the end moment of the first time period is greater than or equal to the second threshold, the first measurement time period may be started (or activated). For example, when the foregoing conditions are met, the terminal device may determine activation time and duration of the MG based on another parameter, for example, mgta.

When the first measurement time period is in another case (for example, is an SMTC, an RMTC, or the like), and the interval between the start moment of the first measurement time period and the end moment of the first time period is greater than or equal to the second threshold, the terminal device may determine, based on another measurement-related parameter, whether to perform measurement.

It should be noted that, for a related parameter of Formula (1), refer to descriptions of Formula (a). Details are not described again.

Further, for a case in which the first time period overlaps the first measurement time period, S1103 includes: When the first time period overlaps the first measurement time period, and a first priority is higher than a second priority, the terminal device does not measure the first reference signal in the second time period.

The first priority is a priority of the first time period, and the second priority is a priority of the first measurement time period. For details, refer to descriptions of S603f. Details are not described again.

Further, for the case in which the first time period overlaps the first measurement time period, S1103 includes: When the first time period overlaps the first measurement time period, based on second indication information, the terminal device does not measure the first reference signal in the second time period.

The second indication information indicates not to measure the first reference signal in the second time period.

For example, the second indication information may be carried in higher layer signaling, for example, RRC signaling. This is not limited in this application.

In this way, the terminal device determines, based on the second indication information, that the reference signal does not need to be measured in a specific time period (for example, the second time period) after the first information is sent, so that the terminal device can normally monitor the second information, to reduce data transmission delay.

It is easy to understand that, if the first time period overlaps the first measurement time period, but an overlapping time period does not include a PDCCH monitoring occasion, it means that the terminal device does not monitor the second information in the overlapping time period. In this case, the terminal device may measure the first reference signal in the second time period, so that the terminal device measures the first reference signal of the candidate cell in a timely manner, to improve accuracy of reference signal measurement.

In some embodiments, the method further includes S1104.

S1104: The terminal device measures the first reference signal in a third time period.

The third time period is described as follows:
In this application, a start moment of the third time period is a second moment. The second moment is equal to the end moment of the first time period, as shown in the block identified by the letter b or d in FIG. 8. Alternatively, the second moment is later than the end moment of the first time period. Further, when the second moment is later than the end moment of the first time period, there is a specific time period, for example, a fourth time period, between the second moment and the end moment of the first time period, as shown in a block identified by a letter e in FIG. 8. The fourth time period is preconfigured, or the fourth time period is a time period configured by a network device (for example, the first network device).

Optionally, an end moment of the third time period is an end moment of the first measurement time period, as shown in the block identified by the letter b in FIG. 8.

Optionally, the third time period includes an overlapping time period between a seventh time period and the first measurement time period, as shown in the block identified by the letter d in FIG. 8. The seventh time period may be semi-statically configured. A start moment of the seventh time period is equal to the end moment of the first time period, as shown in the block identified by the letter d in FIG. 8. Alternatively, a start moment of the seventh time period is later than the end moment of the first time period, which is not shown in the block identified by the letter d in FIG. 8.

For example, an end moment of the seventh time period is earlier than the end moment of the first measurement time period, as shown in the block identified by the letter d in FIG. 8. In this case, it may be understood as that, the end moment of the third time period is earlier than the end moment of the first measurement time period.

In this way, the terminal device can determine the third time period based on the first time period, the seventh time period, and the first measurement time period, and then determine to measure the first reference signal in a part of the first measurement time period.

Optionally, the third time period may include the second overlapping time period, as shown in the block identified by the letter e in FIG. 8. In other words, for a case in which the first time period does not overlap the first measurement time period, for example, when the end moment of the first time period is earlier than the start moment of the first measurement time period, and the interval between the end moment of the first time period and the start moment of the first measurement time period is less than the second threshold, the third time period includes the second overlapping time period. The second overlapping time period is the time period in which the first measurement time period overlaps the sixth time period. The sixth time period may be semi-statically configured. A start moment of the sixth time period is later than or equal to the end moment of the first time period.

For example, the start moment of the sixth time period is earlier than the start moment of the first measurement time period, as shown in the block identified by the letter e in FIG. 8.

For example, an end moment of the sixth time period is earlier than the end moment of the first measurement time period, as shown in the block identified by the letter e in FIG. 8.

In this way, the terminal device can determine the second overlapping time period based on the sixth time period and the first measurement time period, and then determine to measure the first reference signal in the second overlapping time period.

In other words, the third time period may be understood as a part of the first measurement time period.

Optionally, in a possible alternative description, when the second time period includes the first overlapping time period, the terminal device determines that the third time period is activated. Alternatively, when the second time period includes the first overlapping time period, the terminal device determines that a part of the first measurement time period is activated.

In this way, the terminal device can measure the first reference signal of the candidate cell in a timely manner in the third time period. This helps improve reference signal measurement performance and resource utilization.

In this case, the first measurement time period may be obtained by using the foregoing descriptions, and the third time period may be further obtained by using the first measurement time period and the first time period. For example, the condition for performing measurement by the terminal device may further change to the following: After obtaining the start moment of the first measurement time period according to Formula (1), if the end moment of the first time period is in the first measurement time period (for example, this is determined based on a parameter like duration or MGL), the terminal device starts to measure the first reference signal at the second moment. In this case, it may also be understood as that the third time period is a difference between the first measurement time period and the first overlapping time period, for example, the first measurement time period minus the first overlapping time period. In a case, the third time period may also be interpreted as a measurement timing configuration window, for example, an MG, an SMTC, or an RMTC, for performing measurement by the terminal device.

Alternatively, it may be understood as that, a time unit (for example, a subframe) corresponding to the second moment is determined based on the end moment of the first time period, and the end moment of the first time period is in the first measurement time period. For example, for activation time of the first measurement time period, refer to one or more of Formula (1) to Formula (3).

For example, the first measurement time period is an MG, and the 1^{st} time unit (for example, a subframe) of each MG is a subframe that meets the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, when duration (for example, determined based on a parameter MGL) of the MG does not overlap the first time period, the third time period may be started (or activated). In this case, it may be understood as that the third time period is started when the first time period ends (or after the first time period ends), for example, at the second moment.

It should be noted that, for a related parameter of Formula (1), refer to descriptions of Formula (a). Details are not described again.

For another example, the first measurement time period is an SMTC, and the 1^{st} time unit (for example, a subframe) of each SMTC is a subframe that meets the following condition: $\begin{matrix}SFN mod T = \left(FLOOR\left(Offset/10\right)\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (2)

In addition, if duration (for example, determined based on a parameter duration) of the SMTC does not overlap the first time period, the third time period may be started (or activated). In this case, it may be understood as that the third time period is started when the first time period ends (or after the first time period ends), for example, at the second moment.

It should be noted that, for a related parameter of Formula (2), refer to descriptions of Formula (b). Details are not described again.

For still another example, the first measurement time period is an RMTC, and the 1^{st} time unit (for example, a subframe) of each RMTC is a subframe that meets the following condition: $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (3)

In addition, if duration of the RMTC does not overlap the first time period, for example, based on a quantity of consecutive symbols for RSSI sampling reported by a physical layer and a reference subcarrier spacing and a cyclic prefix used for RSSI measurement, the third time period may be started (or activated). In this case, it may be understood as that the third time period is started when the first time period ends (or after the first time period ends), for example, at the second moment.

That the duration of the first measurement time period does not overlap the first time period may be understood as that a time period that is in the first measurement time period and that does not overlap the first time period is the third time period.

It should be noted that, for a related parameter of Formula (3), refer to descriptions of Formula (c). Details are not described again.

When the end moment of the first time period is earlier than the start moment of the first measurement time period, and the interval between the end moment of the first time period and the start moment of the first measurement time period is less than the second threshold, the terminal device may monitor the second information on a PDCCH monitoring occasion in the second overlapping time period. The second overlapping time period includes the overlapping time period between the sixth time period and the first measurement time period, as shown in the block identified by the letter c in FIG. 10.

In this case, the third time period is a difference between the first measurement time period and the second overlapping time period, for example, the first measurement time period minus the second overlapping time period. In a case, the third time period may also be interpreted as a measurement timing configuration window, for example, an MG, an SMTC, or an RMTC, for performing measurement by the terminal device. Alternatively, it may be understood as that, a time unit (for example, a subframe) corresponding to the second moment is determined based on the end moment of the sixth time period, and the end moment of the sixth time period is in the first measurement time period. For example, for activation time of the first measurement time period, refer to one or more of Formula (1) to Formula (3). In this case, the sixth time period may replace the first time period.

For example, the first measurement time period is an MG, and the 1^{st} time unit (for example, a subframe) of each MG is a subframe that meets the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, when duration (for example, determined based on a parameter MGL) of the MG does not overlap the second time period, the third time period may be started (or activated). In this case, it may be understood as that the third time period is started when the sixth time period ends (or after the sixth time period ends), for example, at the second moment.

That the duration of the first measurement time period does not overlap the second time period may be understood as that a time period that is in the first measurement time period and that does not overlap the second time period is the third time period.

It should be supplemented that, in the following manner, when the end moment of the first time period is earlier than the start moment of the first measurement time period, and the interval between the end moment of the first time period and the start moment of the first measurement time period is less than the second threshold, the terminal device does not measure the first reference signal in the first measurement time period.

For example, a case in which the end moment of the first time period is earlier than the start moment of the first measurement time period and the interval between the end moment of the first time period and the start moment of the first measurement time period is less than the second threshold is shown in the block identified by the letter b in FIG. 10.

Because a capability of the terminal device is limited, when the interval between the end moment of the first time period and the start moment of the first measurement time period is less than the second threshold, the terminal device cannot perform frequency switching in a timely manner, for example, switch from a frequency of a current cell to a frequency of the candidate cell, and consequently cannot measure the first reference signal of the candidate cell. The second threshold may be preconfigured or semi-statically configured.

It should be supplemented that, in the following manner, when the end moment of the first time period is earlier than the start moment of the first measurement time period, and the interval between the end moment of the first time period and the start moment of the first measurement time period is less than the second threshold, the terminal device does not measure the first reference signal in the second overlapping time period. The second overlapping time period includes the overlapping time period between the sixth time period and the first measurement time period. For details, refer to descriptions of the parallel manner in S603. Details are not described again. In this way, the terminal device can determine the second overlapping time period based on the sixth time period and the first measurement time period, so that the terminal device does not measure the first reference signal in a part of the first measurement time period.

Alternatively, when the end moment of the first time period is earlier than the start moment of the first measurement time period, and the interval between the end moment of the first time period and the start moment of the first measurement time period is less than the second threshold, the terminal device does not measure the first reference signal in the first measurement time period.

The foregoing describes the reference signal measurement process of the terminal device.

The following describes the reference signal measurement process of the terminal device by using an example in which the first time period does not overlap the first measurement time period.

As shown in FIG. 12, a communication method according to an embodiment of this application further includes the following operations.

S1201: When a first overlapping time period does not exist, and a start moment of a first measurement time period arrives, a terminal device starts the first measurement time period.

The first overlapping time period is a time period in which a first time period overlaps the first measurement time period. For details, refer to descriptions of S603. Details are not described again.

That the first overlapping time period does not exist means that the first time period does not overlap the first measurement time period.

The first measurement time period is determined based on a first configuration. For details, refer to the descriptions of S603. Details are not described again.

Starting the first measurement time period may be understood as that the terminal device measures a first reference signal in the first measurement time period.

For example, for starting the first measurement time period by the terminal device, refer to descriptions of "starting the first measurement time period" in S1103. Details are not described again.

In other words, the terminal device determines, depending on whether the first overlapping time period exists, whether to start the first measurement time period, to determine whether to measure the first reference signal in the first measurement time period. When the first overlapping time period does not exist, the terminal device may start the first measurement time period in a timely manner to measure a reference signal of a candidate cell. In this way, accuracy of reference signal measurement is improved, and service data transmission delay is not affected.

It should be noted that, in this application, the first time period is used as an example for description. The first time period may alternatively have another description, for example, a threshold (for example, a third threshold), and should not be construed as a limitation on this application. For example, the first time period is replaced with the third threshold.

"When an end moment of the first time period is earlier than the start moment of the first measurement time period, and an interval between the end moment of the first time period and the start moment of the first measurement time period is less than a second threshold" may be understood as that the terminal device sends first information at a first moment, and an interval between the first moment and the start moment of the first measurement time period is less than or equal to a sum of the second threshold and the third threshold.

In addition, the first time period may exist. For details, refer to descriptions of FIG. 6 to FIG. 12. Details are not described again. Certainly, the first time period may alternatively not exist. In this case, it may be understood as that duration of the first time period is zero (or the third threshold is zero).

The block identified by the letter e in FIG. 8 is used as an example. It may be understood as that, the terminal device sends the first information at the first moment, and when an interval between a sending moment of the first information and the start moment of the first measurement time period is less than or equal to the second threshold, the terminal device measures the first reference signal in a third time period.

The block identified by the letter b in FIG. 10 is used as an example. It may be understood as that, the terminal device sends the first information at the first moment, and when an interval between a sending moment of the first information and the start moment of the first measurement time period is less than or equal to the second threshold, the terminal device does not measure the first reference signal in the first measurement time period.

The block identified by the letter c in FIG. 10 is used as an example. It may be understood as that, the terminal device sends the first information at the first moment, and when an interval between a sending moment of the first information and the start moment of the first measurement time period is less than or equal to the second threshold, the terminal device does not measure the first reference signal in the second overlapping time period.

It should be understood that this embodiment of this application is applicable to a frequency range (frequency range, FR) 1, is applicable to an FR2, and is applicable to the entire terminal device.

It may be understood that, in the foregoing embodiments, the methods and/or the steps implemented by the network device may alternatively be implemented by a part (for example, a processor, a chip, a chip system, a circuit, a logical module, or software) that can be used in the network device, and the methods and/or the steps implemented by the terminal device may alternatively be implemented by a part (for example, a processor, a chip, a chip system, a circuit, a logical module, or software) that can be used in the terminal device. The chip system may include a chip, or the chip system may include a chip and another discrete device.

It may be understood that, to implement the foregoing functions, a communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

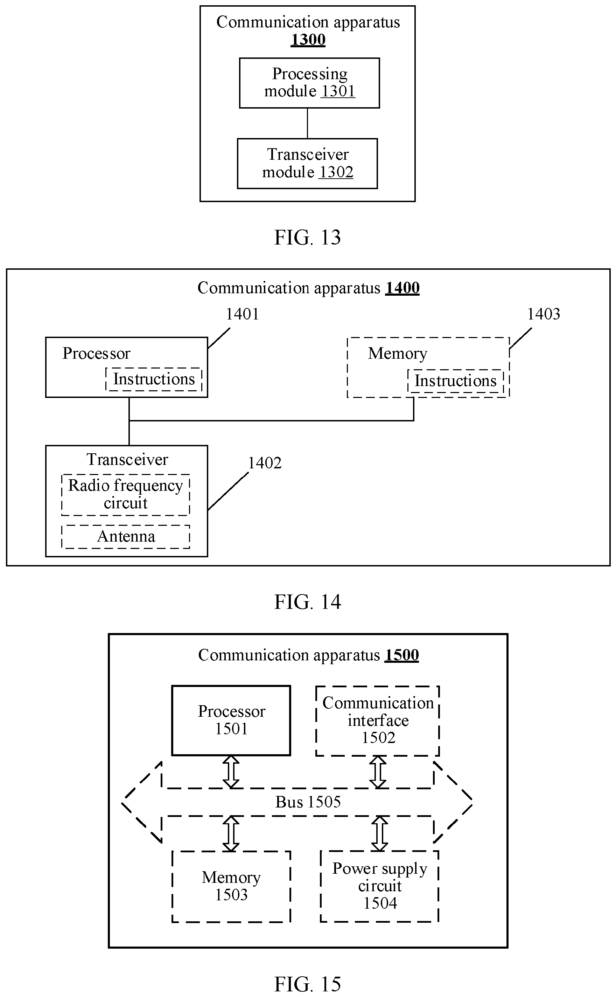

FIG. 13 is a diagram of a structure of a communication apparatus 1300. The communication apparatus 1300 includes a processing module 1301 and a transceiver module 1302. The communication apparatus 1300 may be configured to implement a function of the foregoing network device or terminal device.

In some embodiments, the communication apparatus 1300 may further include a storage module (not shown in FIG. 13), configured to store program instructions and data.

In some embodiments, the transceiver module 1302 may also be referred to as a transceiver unit, configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module, respectively configured to perform receiving and sending steps performed by the network device or the terminal device in the foregoing method embodiments, and/or configured to support another process of the technologies described in this specification. The processing module 1301 may be configured to perform a processing-related (for example, determining) step performed by the network device or the terminal device in the foregoing method embodiments, and/or configured to support another process of the technologies described in this specification.

All related content of the steps in the foregoing method embodiments may be cited in function descriptions of the corresponding functional modules. Details are not described herein again.

Optionally, in this application, that the transceiver module receives/sends information may alternatively be understood as that the processing module receives/sends the information by using the transceiver module. That the processing module receives/sends the information via the transceiver module may alternatively be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 1300 may be presented with the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 1300 in FIG. 13 is a chip or a chip system, a function/an implementation process of the transceiver module 1302 may be implemented through an input/output interface (or a communication interface) of the chip or the chip system, and a function/an implementation process of the processing module 1301 may be implemented by using a processor (or a processing circuit) of the chip or the chip system.

The communication apparatus 1300 provided in this embodiment may perform the foregoing methods. Therefore, for technical effects that can be achieved by the communication apparatus 1300, refer to the foregoing method embodiments. Details are not described herein again.

In a possible product form, the network device or the terminal device in embodiments of this application may alternatively be implemented by using the following: one or more field programmable gate arrays (field programmable gate arrays, FPGAs), a programmable logic device (programmable logic device, PLD), a controller, a state machine, a logic gate, a discrete hardware component, any other suitable circuit, or any combination of circuits that can perform various functions described throughout this application.

In another possible product form, the network device and the terminal device in embodiments of this application may be implemented by using a general bus architecture. For ease of description, FIG. 14 is a diagram of a structure of a communication apparatus 1400 according to an embodiment of this application. The communication apparatus 1400 includes a processor 1401 and a transceiver 1402. The communication apparatus 1400 may be a network device, or a chip or a chip system in the network device. Alternatively, the communication apparatus 1400 may be a terminal device, or a chip or a module in the terminal device. FIG. 14 shows only main components of the communication apparatus 1400. In addition to the processor 1401 and the transceiver 1402, the communication apparatus 1400 may further include a memory 1403 and an input/output apparatus (not shown in the figure).

Optionally, the processor 1401 is mainly configured to: process a communication protocol and communication data, control the entire communication apparatus, execute a software program, and process data of the software program. The memory 1403 is mainly configured to store the software program and the data. The transceiver 1402 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1401, the transceiver 1402, and the memory 1403 may be connected through a communication bus.

It should be noted that the memory 1403 may be independent of the processor 1401, or may be integrated with the processor 1401. The memory 1403 may be located inside the communication apparatus 1400, or may be located outside the communication apparatus 1400. This is not limited.

After the communication apparatus is powered on, the processor 1401 may read the software program in the memory 1403, explain and execute instructions of the software program, and process data of the software program. When data needs to be sent wirelessly, the processor 1401 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1401. The processor 1401 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 1300 may be in a form of the communication apparatus 1400 shown in FIG. 14.

In an example, a function/an implementation process of the processing module 1301 in FIG. 13 may be implemented by the processor 1401 in the communication apparatus 1400 shown in FIG. 14 by invoking computer-executable instructions stored in the memory 1403. A function/an implementation process of the transceiver module 1302 in FIG. 13 may be implemented by the transceiver 1402 in the communication apparatus 1400 shown in FIG. 14.

In another possible product form, the network device or the terminal device in this application may use a composition structure shown in FIG. 15, or include components shown in FIG. 15. FIG. 15 is a diagram of composition of a communication apparatus 1500 according to this application.

As shown in FIG. 15, the communication apparatus 1500 includes at least one processor 1501. Optionally, the communication apparatus further includes a communication interface 1502.

When related program instructions are executed in the at least one processor 1501, the communication apparatus 1500 may be enabled to implement the communication method provided in any one of the foregoing embodiments and any possible design thereof. Alternatively, the processor 1501 is configured to implement, by using a logic circuit or executing code instructions, the communication method provided in any one of the foregoing embodiments and any possible design thereof.

The communication interface 1502 may be configured to receive the program instructions and transmit the program instructions to the processor. Alternatively, the communication interface 1502 may be configured to perform communication interaction between the communication apparatus 1500 and another communication device, for example, exchange control signaling and/or service data. For example, the communication interface 1502 may be configured to receive a signal from an apparatus other than the communication apparatus 1500, and transmit the signal to the processor 1501, or send a signal from the processor 1501 to a communication apparatus other than the communication apparatus 1500.

Optionally, the communication interface 1502 may be a code and/or data read/write interface circuit, or the communication interface 1502 may be a signal transmission interface circuit between a communication processor and a transceiver, or may be a pin of a chip.

Optionally, the communication apparatus 1500 may further include at least one memory 1503, and the memory 1503 may be configured to store the related program instructions and/or data that are/is required.

It should be noted that the memory 1503 may be independent of the processor 1501, or may be integrated with the processor 1501. The memory 1503 may be located inside the communication apparatus 1500, or may be located outside the communication apparatus 1500. This is not limited.

Optionally, the communication apparatus 1500 may further include a power supply circuit 1504, and the power supply circuit 1504 may be configured to supply power to the processor 1501. The power supply circuit 1504 may be located in a same chip as the processor 1501, or may be located in a chip other than a chip in which the processor 1501 is located.

Optionally, the communication apparatus 1500 may further include a bus 1505, and parts of the communication apparatus 1500 may be interconnected through the bus 1505.

In some embodiments, in hardware implementation, a person skilled in the art may figure out that the communication apparatus 1300 shown in FIG. 13 may be in a form of the communication apparatus 1500 shown in FIG. 15.

In an example, a function/an implementation process of the processing module 1301 in FIG. 13 may be implemented by the processor 1501 in the communication apparatus 1500 shown in FIG. 15 by invoking computer-executable instructions stored in the memory 1503. A function/an implementation process of the transceiver module 1302 in FIG. 13 may be implemented by the communication interface 1502 in the communication apparatus 1500 shown in FIG. 15.

It should be noted that the structure shown in FIG. 15 does not constitute a specific limitation on the network device or the terminal device. For example, in some other embodiments of this application, the network device or the terminal device may include more or fewer components than those shown in the figure, a combination of some components, splitting of some components, or a different arrangement of the components. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include the volatile memory and the non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, in other words, may be located together in a same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, comprising:
sending first information at a first moment, wherein the first information indicates first data, and the first data is to-be-transmitted data; and
when a first time period overlaps a first measurement time period, monitoring second information on a physical downlink control channel PDCCH monitoring occasion in a second time period, wherein the second information indicates a first uplink resource, a start moment of the first time period is equal to or later than the first moment, and the second time period comprises at least one of the following:
a first overlapping time period, wherein the first overlapping time period is a time period in which the first time period overlaps the first measurement time period; or
the first measurement time period, wherein
the first measurement time period is determined based on a first configuration, and the first configuration is a configuration for sending a first reference signal by a candidate cell.

2. The method according to claim 1, wherein when the second time period comprises the first overlapping time period, the PDCCH monitoring occasion in the second time period comprises a time period in which the first overlapping time period overlaps a first monitoring time period, wherein the first monitoring time period is determined based on a second configuration, and the second configuration is used to determine a PDCCH monitoring time period.

3. The method according to claim 1 or 2, wherein the method further comprises:
skipping measuring the first reference signal in the second time period, wherein a measurement result of the first reference signal indicates signal quality of the candidate cell.

4. The method according to any one of claims 1 to 3, wherein the method further comprises:
when the second time period comprises the first overlapping time period, measuring the first reference signal in a third time period, wherein a start moment of the third time period is a second moment, the second moment is equal to or later than an end moment of the first time period, and an end moment of the third time period is an end moment of the first measurement time period.

5. The method according to claim 4, wherein
when the second moment is later than the end moment of the first time period, there is a fourth time period between the second moment and the end moment of the first time period.

6. The method according to any one of claims 1 to 5, wherein the method further comprises:
receiving first configuration information, wherein the first configuration information indicates the first configuration.

7. The method according to any one of claims 1 to 6, wherein the first time period is greater than or equal to a sum of N first measurement time periods, and N is a positive integer.

8. The method according to any one of claims 1 to 6, wherein
the first time period is preconfigured; or
the first time period is configured by a first communication apparatus; or
the first time period is determined based on the first data.

9. The method according to any one of claims 1 to 6, wherein
the first time period is determined by using a first timer, and the first timer is a timer started in response to the sending of the first information.

10. The method according to any one of claims 1 to 9, wherein
when the start moment of the first time period is later than the first moment, there is a fifth time period between the start moment of the first time period and the first moment.

11. The method according to any one of claims 1 to 10, wherein
the first data is all to-be-transmitted data corresponding to a first logical channel group LCG, and the first LCG is one or more of at least one LCG; or
the first data is data whose remaining delay budget is less than a first delay threshold in a first LCG, the first LCG is one or more of at least one LCG, and the first delay threshold is a parameter configured by using second configuration information.

12. The method according to any one of claims 1 to 11, wherein
that the first information indicates the first data comprises: the first information indicates at least one of the following:
a first data amount, wherein the first data amount is a data amount of the first data;
first delay information, wherein the first delay information is delay information of second data, and the second data is data with a shortest remaining delay budget in the first data; or
a first parameter, wherein the first parameter indicates a first buffer status list, the first buffer status list comprises at least one index, and one of the at least one index indicates a data amount of the first data.

13. The method according to any one of claims 1 to 12, wherein
the first information comprises a scheduling request SR, and the SR is used to request an uplink resource for transmission of the first data; or
the first information comprises a delay status report DSR, and the DSR indicates delay of the first data; or
the first information comprises a buffer status report BSR, and the BSR indicates the data amount of the first data.

14. The method according to any one of claims 1 to 13, wherein the method further comprises:
sending third information in the second time period, wherein the third information indicates third data or uplink control information.

15. A communication method, comprising:
receiving first information at a first moment, wherein the first information indicates first data, and the first data is to-be-transmitted data;
determining a first time period based on the first information; and
when the first time period overlaps a first measurement time period, sending second information on a physical downlink control channel PDCCH monitoring occasion in a second time period, wherein the second information indicates a first uplink resource, and the second time period comprises at least one of the following:
a first overlapping time period, wherein the first overlapping time period is a time period in which the first time period overlaps the first measurement time period; or
the first measurement time period, wherein
the first measurement time period is determined based on a first configuration, and the first configuration is a configuration for sending a first reference signal by a candidate cell.

16. The method according to claim 15, wherein when the second time period comprises the first overlapping time period, the PDCCH monitoring occasion in the second time period comprises a time period in which the first overlapping time period overlaps a first monitoring time period, wherein the first monitoring time period is determined based on a second configuration, and the second configuration is used to determine a PDCCH monitoring time period.

17. The method according to claim 15 or 16, wherein the method further comprises:
receiving third information in the second time period, wherein the third information indicates third data or uplink control information.

18. A communication apparatus, wherein the communication apparatus is configured to implement the method according to any one of claims 1 to 14.

19. The communication apparatus according to claim 18, wherein the communication apparatus comprises a terminal device or a chip.

20. A communication apparatus, wherein the communication apparatus is configured to implement the method according to any one of claims 15 to 17.

21. The communication apparatus according to claim 20, wherein the communication apparatus comprises a network device or a chip.

22. A computer-readable storage medium, storing a computer program or instructions, wherein when the computer program or the instructions are executed, the method according to any one of claims 1 to 14 is implemented, or the method according to any one of claims 15 to 17 is implemented.

23. A computer program product, wherein when the computer program product runs, the method according to any one of claims 1 to 14 is performed, or the method according to any one of claims 15 to 17 is performed.
